# EUROPÄISCHE PATENTSCHRIFT

(11) **EP 2 752 785 B1**
(45) Veröffentlichungstag und Bekanntmachung des Hinweises auf die Patenterteilung: **16.09.2015**
(21) Anmeldenummer: 13192288.2
(22) Anmeldetag: 11.11.2013
(51) Int. Cl.: G06F 21/34, H04L 29/06, H04L 29/08

(54) **Verfahren zur Personalisierung eines Secure Elements (SE) und Computersystem**
Method for personalisation of a secure element (SE) and computer system
Procédé de personnalisation d'un élément sécurisé (Secure Element SE) et système informatique

(30) Priorität: 20.12.2012 DE 102012224083
(43) Veröffentlichungstag der Anmeldung: 09.07.2014
(73) Patentinhaber: Bundesdruckerei GmbH, 10969 Berlin (DE)
(72) Erfinder: Schröder, Martin, 12437 Berlin (DE)
(74) Vertreter: Richardt Patentanwälte PartG mbB

(56) Entgegenhaltungen:
- DE-A1-102009 046 205
- US-A1- 2011 191 829
- "Gesetz über Personalausweise und den elektronischen Identitätsnachweis sowie zur Änderung weiterer Vorschriften", , 24. Juni 2009 (2009-06-24), XP055117888, Gefunden im Internet: URL:http://www.bgbl.de/banzxaver/bgbl/text .xav?SID=&start=//*[@node_id='170726']&tf= xaver.component.Text_0&hlf=xaver.component .Hitlist_0#bgbl109s1346.pdf [gefunden am 2014-05-14]
- Bsi: "Common Criteria Protection Profile Electronic Identity Card (ID_Card PP)", , 15. Dezember 2009 (2009-12-15), Seiten 1-108, XP055117658, Gefunden im Internet: URL:http://www.commoncriteriaportal.org/fi les/ppfiles/pp0061b_pdf.pdf [gefunden am 2014-05-13]
- John K. Waters: "RSA Conference: Microsoft Releases Authentication System Under OSP -- Visual Studio Magazine", , 3. März 2010 (2010-03-03), XP055118012, Gefunden im Internet: URL:http://visualstudiomagazine.com/articl es/2010/03/03/microsoft-releases-preview-o f-uprove.aspx [gefunden am 2014-05-14]
- Chris Chavez: "No NFC? No Problem! Thanks to SD Cards Equipped With NFC Transmitters", , 1. Juni 2011 (2011-06-01), Seiten 1-4, XP055079659, Gefunden im Internet: URL:http://phandroid.com/2011/06/01/no-nfc -no-problem-thanks-to-sd-cards-equipped-wi th-nfc-transmitters/ [gefunden am 2013-09-17]

## Beschreibung

Die Erfindung betrifft ein Verfahren zur Personalisierung eines Secure Elements (SE) und ein Computersystem.

Der elektronische Personalausweis (ePA) der Bundesrepublik Deutschland beinhaltet die Anwendung "elektronischer Identitätsnachweis (eID)". Diese Anwendung des ePA ermöglicht die verbindliche elektronische Übermittlung von Identitätsmerkmalen, das heißt Attributen des Nutzers und/oder des ePA, in online-Anwendungen. Solche Attribute sind als Personalisierungsinformation in einem sicheren elektronischen Speicher des ePA gespeichert. Der ePA wird auch als nPA bezeichnet. Daneben gibt es den elektronischen Aufenthaltstitel "eAT".

Aus DE 10 2008 000 067 B4 ist ein Verfahren zum Lesen von Attributen aus einem ID-Token bekannt, bei dem ein ID-Provider-Computersystem über ein Netzwerk zumindest ein Attribut aus dem ID-Token ausliest, wobei es sich bei dem ID-Token zum Beispiel um ein Ausweisdokument, wie den ePA handeln kann. Aus DE 10 2008 040 416 A1, DE 10 2009 001 959 A1, DE 10 2009 027 676, DE 10 2009 027 681 A1, DE 10 2009 027 682 A1, DE 10 2009 027 686 A1, DE 10 2009 027 723 A1, DE 10 2009 046 205 A1 und DE 10 2010 028 133 A1 sind Weiterbildungen und verschiedene Verwendungen dieses Verfahrens bekannt.

In DE 10 2011 084 728 und DE 10 2011 089 580.9, deren Offenbarungsgehalte vollumfänglich hiermit zum Offenbarungsgehalt der vorliegenden Patentanmeldung gemacht werden, sind Verfahren zum Lesen von Attributen aus einem ID-Token unter Verwendung einer SAML-Request und einer SAML-Response offenbart.

In DE 10 2012 215 630, deren Offenbarungsgehalte vollumfänglich hiermit zum Offenbarungsgehalt der vorliegenden Patentanmeldung gemacht wird, ist ein Verfahren zur Personalisierung eines Secure Elements offenbart.

Der elektronische Personalausweis der Bundesrepublik Deutschland (ePA) hat eine Pseudonym-Funktion, die auch als "Restricted Identifier" (rID) bezeichnet wird, vgl. Technical Guideline TR-03110-2, Advanced Security Mechanisms for Machine Readable Travel Documents -Part 2 - Extended Access Control Version 2 (EACv2), Password Authenticated Connection Establishment (PACE), and Restricted Identification (RI), Version 2.10, 20. March 2012, Bundesamt für Sicherheit in der Informationstechnik. Diese Pseudonym-Funktion ermöglicht ein anonymes Login auf Websites. Der ePA erzeugt eine pseudonyme Kartenkennung und übermittelt diese an die Website. Bei jedem weiteren Aufruf der Website wird die gleiche Kartenkennung übermittelt, sodass der Ausweisinhaber "wiedererkannt" wird. Eine Weiterbildung dieser Pseudonym-Funktion ist in DE 10 2012 201 209.5 offenbart, deren Offenbarungsgehalte vollumfänglich hiermit zum Offenbarungsgehalt der vorliegenden Patentanmeldung gemacht wird.

Der Erfindung liegt demgegenüber die Aufgabe zugrunde, ein Verfahren zur Personalisierung eines Secure Elements zu schaffen sowie ein entsprechendes Computersystem.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter einem "Secure Element" oder "SE" wird hier ein Security Token oder Sicherheitstoken verstanden, welcher auch als Authentification Token oder Cryptographic Token bezeichnet wird. Hierbei kann es sich zum Beispiel um einen USB-Stick oder eine Chipkarte handeln.

Unter einem "ID-Token" wird hier insbesondere ein Wert- oder Sicherheitsdokument verstanden, das heißt insbesondere ein Ausweisdokument, das heißt ein ID-Dokument, insbesondere ein elektronischen Personalausweis (ePA), eAT, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle, verstanden.

Unter einem "Terminalprogramm" wird hier ein Programm verstanden, das dazu ausgebildet ist, auf ein Secure Element, wie zum Beispiel eine Chipkarte, zuzugreifen, beispielsweise um eine Schreib- oder Leseoperation zum Schreiben oder Lesen von Daten durchzuführen und/oder um auf eine Chipkartenfunktion des Secure Elements zuzugreifen. Das Terminalprogramm kann zum Beispiel von einem Chipkarten-Terminal ausgeführt werden, wobei die Kommunikation mit dem Secure Element über sogenannte APDUs erfolgt. Ferner kann das Terminalprogramm auch auf einem anderen Host ausgeführt werden, wie zum Beispiel auf einem Smartphone.

Nach Ausführungsformen der Erfindung wird ein Lesezugriff auf in dem ID-Token gespeicherte Personalisierungsinformation durchgeführt, um diese Personalisierungsinformation in dem Secure Element zu speichern, um das Secure Element zu personalisieren.

Durch die Personalisierung des Secure Element mithilfe des bereits personalisierten ID-Token erhält der Nutzer so ein von dem ID-Token abgeleitetes personalisiertes Secure Element, welches er für elektronische Geräte einsetzen kann, welche eine Kommunikations-Schnittstelle aufweisen, die mit dem zweiten Datenübertragungsstandard, nicht aber mit dem ersten Datenübertragungsstandard kompatibel sind.

Je nach Ausführungsform kann von besonderem Vorteil sein, dass der ID-Token über eine Kommunikations-Schnittstelle verfügt, die einen ersten Datenübertragungsstandard implementiert, wohingegen das Secure Element eine Kommunikations-Schnittstelle aufweist, welche einen zweiten Datenübertragungsstandard implementiert, welcher mit dem ersten Datenübertragungsstandard nicht kompatibel ist. Das Lesegerät unterstützt die ersten und zweiten Datenübertragungsstandards, kann also sowohl mit dem ID-Token als auch mit dem Secure Element Daten austauschen.

Beispielsweise ist der ID-Token ein RFID-Dokument, beispielsweise mit einer RFID Schnittstelle nach ISO 14443" wohingegen das Secure Element eine NFC-Schnittstelle hat. Die Erfindung ermöglicht es dann, dass ein Nutzer die in dem ID-Token gespeicherte Personalisierungsinformation auch für ein elektronisches Gerät, wie zum Beispiel ein Smartphone, mit NFC Schnittstelle verwenden kann, indem nämlich dieses elektronische Gerät über seine Kommunikations-Schnittstelle nicht mit dem ID-Token, sondern mit dem Secure Element kommuniziert, welches die Personalisierungsinformation aus dem ID-Token beinhaltet.

Ausführungsformen der Erfindung sind besonders vorteilhaft, da durch das ID-Provider-Computersystem für die aus dem ID-Token ausgelesene Personalisierungsinformation eine Nonce erzeugt wird.

Unter einer "Nonce" wird hier eine Zeichenkombination, wie zum Beispiel eine Zahlen- und/oder Buchstabenkombination, z.B. für eine kurzfristige, insbesondere eine einmalige Verwendung, verstanden, beispielsweise eine Zufallszahl oder Pseudozufallszahl.

Das ID-Provider-Computersystem speichert die Nonce in einer Datenbank, auf welche das ID-Provider-Computersystem Zugriff hat oder welche einen integralen Bestandteil des ID-Provider-Computersystems bildet. Für die Speicherung der Nonce in der Datenbank wird die zuvor aus dem ID-Token ausgelesene Personalisierungsinformation oder ein daraus abgeleiteter Wert, wie zum Beispiel ein Hashwert als Zugriffsschlüssel verwendet, sodass mithilfe von diesem Zugriffsschlüssel zu einem späteren Zeitpunkt die Nonce aus der Datenbank wieder ausgelesen werden kann.

Die Ableitung des Werts aus der Personalisierungsinformation erfolgt mithilfe eines vordefinierten kryptografischen Algorithmus, wie zum Beispiel nach einem Hashverfahren oder einem anderen Komprimierungs- oder Codierungsverfahren. Als Zugriffsschlüssel auf die Datenbank kann also die Personalisierungsinformation im Klartext oder der daraus abgeleitete Wert dienen. Im letzteren Fall leitet das ID-Provider-Computersystem den Wert mithilfe des vordefinierten kryptografischen Algorithmus aus der Personalisierungsinformation ab. Die Ableitung des Werts aus der Personalisierungsinformation kann durch ein Datenkompressionsverfahren, insbesondere ein HASH Verfahren erfolgen. Die Speicherung nur des abgeleiteten Werts in der Datenbank und nicht der Personalisierungsinformation selbst kann vorteilhaft sein, wenn die Personalisierungsinformation besonders vertraulich und/oder schutzbedürftig ist, wie z.B. die vollständige Anschrift einer Person oder eine Kreditkartennummer, oder wenn die Personalisierungsinformation einen besonders großen Umfang hat, wie es z.B. bei einem Foto der Fall sein kann. Letzteres hat den weiteren Vorteil, dass dann auch auf dem Secure Element nicht die Personalisierungsinformation selbst, sondern nur der daraus abgeleitete komprimierte Wert gespeichert werden muss, was besonders bei einem Foto vorteilhaft ist.

Das ID-Provider-Computersystem schreibt dann die aus dem ID-Token ausgelesene Personalisierungsfunktion und die für diese Personalisierungsinformation erzeugte Nonce über das Netzwerk in das Secure Element. Je nach Anwendungsfall kann alternativ oder zusätzlich zu der Personalisierungsinformation der aus der Personalisierungsinformation abgeleitete Wert in das Secure Element geschrieben werden. In letzterem Fall erfolgt dann also die Personalisierung mit dem abgeleiteten Wert.

Da es bei diesem Vorgang, das heißt dem Auslesen der Personalisierungsinformation aus dem ID-Token und dem anschließenden Schreiben der Personalisierungsinformation in das Secure Element, zu verschiedenen Angriffen kommen könnte, wie zum Beispiel einem Relay-Angriff, bei welchem ein Angreifer versucht, dass das Schreiben der Personalisierungsinformation nicht in das Secure Element des autorisierten Nutzers, sondern ein anderes Secure Element erfolgt, wird anschließend eine Verifizierung der in dem Secure Element gespeicherten Personalisierungsinformation durchgeführt.

Hierzu wird die Personalisierungsinformation nochmals aus dem ID-Token von dem ID-Provider-Computersystem ausgelesen und mithilfe dieser Personalisierungsinformation oder dem hieraus von dem ID-Provider-Computersystem abgeleiteten Wert auf die Datenbank ein Lesezugriff durchgeführt, um die zuvor in der Datenbank gespeicherte Nonce zu lesen.

Zumindest die Nonce oder auch die Personalisierungsinformation und/oder der daraus abgeleitete Wert werden dann aus dem Secure Element durch das ID-Provider-Computersystem ausgelesen. Je nach Ausführungsform kann das Secure Element aus der Personalisierungsinformation gemäß dem vordefinierten kryptografischen Algorithmus den Wert ableiten und das ID-Provider-Computersystem kann zusätzlich oder alternativ diesen Wert aus dem Secure Element auslesen.

Das ID-Provider-Computersystem prüft dann, ob die aus dem Secure Element ausgelesene Nonce und die aus der Datenbank ausgelesene Nonce übereinstimmen.

Optional kann ferner auch geprüft werden, ob die aus dem ID-Token nochmals ausgelesene Personalisierungsinformation mit der aus dem Secure Element ausgelesenen Personalisierungsinformation übereinstimmt. Alternativ oder zusätzlich kann das ID-Provider-Computersystem auch prüfen, ob der abgeleitete Wert der Personalisierungsinformation des ID-Tokens mit dem abgeleiteten Wert der Personalisierungsinformation des Secure Elements übereinstimmt.

Wenn diese Prüfungen ergeben, dass tatsächlich eine Übereinstimmung vorliegt, so bedeutet dies, dass das personalisierte Secure Element auch tatsächlich das Secure Element des autorisierten Benutzers ist. Daher kann nun das Secure Element zur Verwendung durch ein Terminalprogramm freigeschaltet werden.

Hierzu erzeugt das ID-Provider-Computersystem ein Freischaltsignal, welches von dem ID-Provider-Computersystem über das Netzwerk an das Secure Element übertragen wird. Aufgrund des Empfangs des Freischaltsignals wird in dem Secure Element in einem geschützten nicht-flüchtigen Speicherbereich eine Information gespeichert, wie zum Beispiel ein Statusbit oder ein sogenanntes Flag, um dadurch zu spezifizieren, dass das Secure Element für die Verwendung durch das Terminalprogramm freigeschaltet ist.

Der Nutzer kann dann das Secure Element zum Beispiel für einen Chipkartenterminal, wie zum Beispiel einen Geldautomaten, verwenden, durch welchen ein Terminalprogramm durchgeführt wird. Nach Authentifizierung des Nutzers gegenüber dem Secure Element, beispielsweise durch Eingabe von dessen PIN, fragt das Terminalprogramm zunächst die Information von dem Secure Element ab, um zu prüfen, ob das Secure Element freigeschaltet ist. Diese Abfrage muss nicht unbedingt von dem Terminalprogramm gestellt werden. Es ist auch möglich, dass das Secure Element sich selber überprüft, also diese Abfrage selber durchführt. Stellt es dabei fest, dass es noch nicht freigeschaltet wurde, verweigert es den nachfolgenden Austausch von Informationen.

Diese Freischaltung ist eine Voraussetzung für den nachfolgenden Austausch von Informationen zwischen dem Terminalprogramm und dem Secure Element, beispielsweise zum Abheben von Bargeld oder einer anderen finanziellen Transaktion. Alternativ kann es sich bei dem Terminalprogramm auch um eine sogenannte App handeln, die zum Beispiel auf dem Smartphone des Nutzers läuft, wobei das Smartphone einen integrierten Leser für das Secure Element beinhaltet.

Nach Ausführungsformen der Erfindung kann dabei wie folgt vorgegangen werden:
Zum Auslesen der Personalisierungsinformation aus dem ID-Token wird ein ID-Provider-Computersystem verwendet, welches über ein Netzwerk die Personalisierungsinformation ausliest. Dies setzt die Authentifizierung des Nutzers und die Authentifizierung des ID-Provider-Computersystems gegenüber dem ID-Token voraus sowie die erfolgreiche Überprüfung der Leseberechtigung des ID-Provider-Computersystems durch den ID-Token anhand eines Zertifikats des ID-Provider-Computersystems.

Die Übertragung der Personalisierungsinformation von dem ID-Token an das ID-Provider-Computersystem erfolgt mit Ende-zu-Ende-Verschlüsselung, wobei die ID-Token-seitige Verschlüsselung durch einen Prozessor des ID-Tokens durchgeführt wird. Die Verbindung des ID-Tokens mit dem Netzwerk erfolgt über ein Lesegerät, das zum Beispiel über ein Nutzer-Computersystem an das Netzwerk angeschlossen ist.

Das Lesegerät hat erste und zweite Kommunikations-Schnittstellen, die den ersten bzw. den zweiten Datenübertragungsstandard implementieren.

Unter einem "ID-Provider-Computersystem" wird hier ein Computersystem verstanden, welches dazu ausgebildet ist, über ein Netzwerk, wie zum Beispiel das Internet, einen Lesezugriff auf einen ID-Token sowie einen Schreibzugriff und einen Lesezugriff auf ein Secure Element durchzuführen.

Unter einem "Lesegerät" wird hier ein Lesesystem verstanden, welches erste und zweite Kommunikations-Schnittstellen beinhaltet, die entsprechende erste und zweite Datenübertragungsstandards implementieren. Hierzu kann das Lesesystem ein einziges Lesegerät aufweisen, welches beide Datenübertragungsstandards implementiert oder zwei separate Lesegeräte für jeweils einen Datenübertragungsstandard.

Zum Schreiben der Personalisierungsinformation in das Secure Element muss sich der Nutzer gegenüber dem Secure Element authentifizieren, wie zum Beispiel durch Eingabe einer PIN und/oder biometrisch, und ferner muss sich auch das ID-Provider-Computersystem gegenüber dem Secure Element authentifizieren, wobei die Schreibberechtigung des ID-Provider-Computersystems zum Schreiben der Personalisierungsinformation in das Secure Element mithilfe eines Zertifikats des ID-Provider-Computersystems durch das Secure Element geprüft wird. Die Übertragung der Personalisierungsinformation von dem ID-Provider-Computersystem an das Secure Element über das Netzwerk erfolgt mittels Ende-zu-Ende-Verschlüsselung, wobei die Entschlüsselung durch einen Prozessor des Secure Elements vorgenommen wird.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen. Vorzugsweise handelt es sich bei dem Zertifikat um ein Card Verifiable Certificate (CVC).

Ausführungsformen der Erfindung sind besonders vorteilhaft, da mit einem hohen Maß an Sicherheit und geringem apparativem Aufwand ein Nutzer in die Lage versetzt wird, ein Secure Element mit der in seinem ID-Token gespeicherten Personalisierungsinformation zu personalisieren, wobei das Secure Element im Wesentlichen die gleichen Sicherheitsanforderungen erfüllt wie der ID-Token selbst. Vorzugsweise ist dabei ein Zugriff auf einen geschützten Speicherbereich des ID-Tokens bzw. des Secure Elements zum Lesen der Personalisierungsinformation bzw. zum Schreiben der Personalisierungsinformation nicht unmittelbar über die jeweilige Schnittstelle des ID-Tokens bzw. des Secure Elements möglich, sondern nur über den jeweiligen Prozessor des ID-Tokens bzw. des Secure Elements, nachdem die hierzu erforderlichen Voraussetzungen erfüllt sind, d.h. die Authentifizierungen und die Prüfung der Berechtigung zum Lesen bzw. Schreiben der Daten, so dass der Prozessor nur dann den entsprechenden Zugriff ermöglicht. Insbesondere schließt das aus, dass ein interner Datenbus den geschützten Speicherbereich des ID-Tokens bzw. des Secure Elements unmittelbar mit der Kommunikationsschnittstelle des ID-Tokens bzw. des Secure Elements verbindet.

Nach einer Ausführungsform der Erfindung erfolgt die Speicherung der Nonce in der Datenbank mit einem Zeitstempel, wobei der Zeitstempel beispielsweise den Zeitpunkt der Erzeugung der Nonce oder den Zeitpunkt der Speicherung der Nonce in der Datenbank angibt. Als zusätzliche Voraussetzung für die Verifizierung der in dem Secure Element gespeicherten Personalisierungsinformation wird durch das ID-Provider-Computersystem geprüft, ob seit dem in dem Zeitstempel angegebenen Zeitpunkt bis zum Zeitpunkt der Verifizierung nicht mehr als ein Zeitintervall einer vorgegebenen Länge vergangen ist. Hierdurch werden insbesondere Replay-Angriffe und dergleichen abgewehrt.

Nach einer Ausführungsform der Erfindung beinhaltet das ID-Provider-Computersystem einen ersten Server zum Auslesen der Personalisierungsinformation aus dem ID-Token, wobei dem ersten Server ein erstes Zertifikat zugeordnet ist, welches die entsprechende Leseberechtigung spezifiziert. Das ID-Provider-Computersystem hat ferner einen zweiten Server zum Schreiben der Personalisierungsinformation und der Nonce in das Secure Element sowie zum Auslesen der Personalisierungsinformation und/oder des daraus abgeleiteten Werts und der Nonce aus dem Secure Element, wobei der zweite Server ein zweites Zertifikat hat, welches die hierzu erforderlichen Schreib- und Leserechte gibt. Beispielsweise gehören das erste Zertifikat und das zweite Zertifikat unterschiedliche Public Key-Infrastructures (PKI) an, beispielsweise das erste Zertifikat einer PKI, die die gesetzlichen Erfordernisse für einen hoheitlichen Zugriff auf Ausweisdokumente erfüllt und das zweite Zertifikat einer anderen, beispielsweise kommerziellen PKI.

Der erste Server und der zweite Server können als getrennte Hardwareeinheiten ausgebildet sein, die intern in dem ID-Provider-Computersystem zum Beispiel über einen Datenbus oder ein Netzwerk kommunizieren. Alternativ können der erste Server und der zweite Server auch zum Beispiel auf derselben oder getrennten Hardwareeinheiten als sogenannte virtuelle Server realisiert sein und eine Kommunikation zwischen den ersten und den zweiten Servern kann intern in dem ID-Provider-Computersystem oder über das externe Netzwerk erfolgen.

Nach einer Ausführungsform der Erfindung erzeugt das Lesegerät ein erstes Signal, um dem Nutzer das erstmalige Auslesen der Personalisierungsinformation gemäß Schritt i)a) zu signalisieren und ein zweites Signal, um dem Nutzer das nochmalige Auslesen der Personalisierungsinformation gemäß Schritt ii)a) zu signalisieren. Beispielsweise hat der erste Server ein Personalisierungszertifikat, welches er für seine Authentifizierung für das erstmalige Auslesen der Personalisierungsinformation verwendet und ein weiteres Verifikationszertifikat, welches er für seine Authentifizierung für das nochmalige Auslesen der Personalisierungsinformation im Rahmen der Verifizierung verwendet.

Nach einer Ausführungsform der Erfindung hat das Lesegerät eine Nutzerschnittstelle, zum Beispiel mit einem Display und einer Tastatur. Die Nutzerschnittstelle dient zur Ausgabe eines Abfragesignals, um die Eingabe eines Bestätigungssignals von dem Nutzer abzufragen. Dies erfolgt vor dem Schreiben der Personalisierungsinformation in das Secure Element als zusätzliche Sicherheit, zum Beispiel gegen eine sogenannte "man in the middle"-Attacke.

Nach einer Ausführungsform der Erfindung handelt es sich bei der Personalisierungsinformation um ein ID-Token-Pseudonym.

Unter einem "ID-Token-Pseudonym" wird hier ein Pseudonym verstanden, welches einem ID-Token und/oder dessen Nutzer zugeordnet ist, und welches in dem ID-Token zumindest temporär gespeichert wird, um ein Auslesen aus dem ID-Token durch ein hierzu autorisiertes Terminal, insbesondere ein ID-Provider-Computersystem, zu ermöglichen. Insbesondere kann es sich bei dem ID-Token-Pseudonym um einen Identifikator, insbesondere den Restricted Identifier (rID)des ePA handeln.

Nach einer Ausführungsform der Erfindung sind als Personalisierungsinformation ein oder mehrere Attribute des Nutzers und/oder des ID-Tokens selbst in dem geschützten Speicherbereich des ID-Tokens gespeichert. Zumindest eines dieser Attribute wird als Personalisierungsinformation aus dem ID-Token von dem ID-Provider-Computersystem ausgelesen, um mithilfe dieses Attributs das Secure Element zu personalisieren.

Nach einer Ausführungsform der Erfindung wird zwischen einem Nutzer-Computersystem des Nutzers und einem Dienst-Computersystem über das Netzwerk eine Verbindung hergestellt, über die von dem Nutzer-Computersystem eine Anforderung zur Personalisierung des Secure Elements an das Dienst-Computersystem übertragen wird. Das Dienst-Computersystem erzeugt daraufhin einen SAML-Request, der die aus dem ID-Token zu lesende Personalisierungsinformation spezifiziert. Für die Durchführung des Schreibzugriffs erzeugt das Dienst-Computersystem anschließend einen weiteren SAML-Request.

Unter einem "Nutzer-Computersystem" wird hier ein Computersystem verstanden, auf welches der Nutzer Zugriff hat. Hierbei kann es sich zum Beispiel um eine Personal Computer (PC), um einen Laptop- oder Tablet-PC handeln.

Das Dienst-Computersystem fungiert dabei also jeweils als SAML-Requester (vgl. Security Assertion Markup Language (SAML) V2.0 Technical Overview, OASIS, Committee Draft 02, 25. März 2008).

Nach einer Ausführungsform der Erfindung wird mit Hilfe der Personalisierungsinformation ein Soft-Token erzeugt.

Unter einem "Soft-Token" werden erfindungsgemäß insbesondere signierte Daten verstanden, welche zur Authentisierung eines Nutzers verwendet werden können, insbesondere ein U-Prove-Token. Insbesondere können die signierten Daten die aus dem ID-Token ausgelesene Personalisierungsinformation beinhalten, welche von einer vertrauenswürdigen Instanz signiert sind. Die Erzeugung des Soft-Tokens kann durch das Dienst-Computersystem erfolgen, welches im Falle der Verwendung des U-Prove-Standards dann als "Issuer" fungiert.

Vorzugsweise wird der U-Prove-Token durch Hardware gesichert, indem der private Schlüssel des U-Prove-Token zwischen zwei Geräten aufgeteilt wird (vgl. hierzu U-Prove-Technology Overview V1.1, Draft Revision 1, Microsoft Corporation 2011, Kapitel 6 auf Seite 18). Ein solcher U-Prove-Token wird als device-protected U-Prove Token bezeichnet.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2: ein UML-Diagramm einer Ausführungsform eines erfindungsgemäßen Verfahrens,
- Figur 3: ein UML-Diagramm einer weiteren Ausführungsform eines erfindungsgemäßen Verfahrens.

Elemente der nachfolgenden Ausführungsformen, die einander entsprechen oder identisch sind, werden jeweils mit den gleichen Bezugszeichen gekennzeichnet.

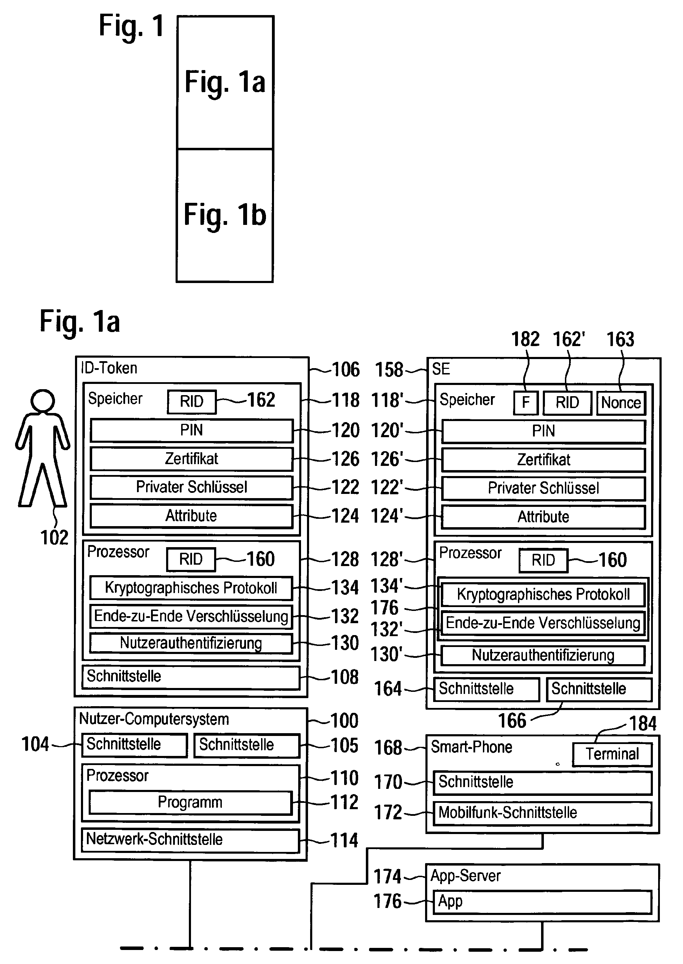

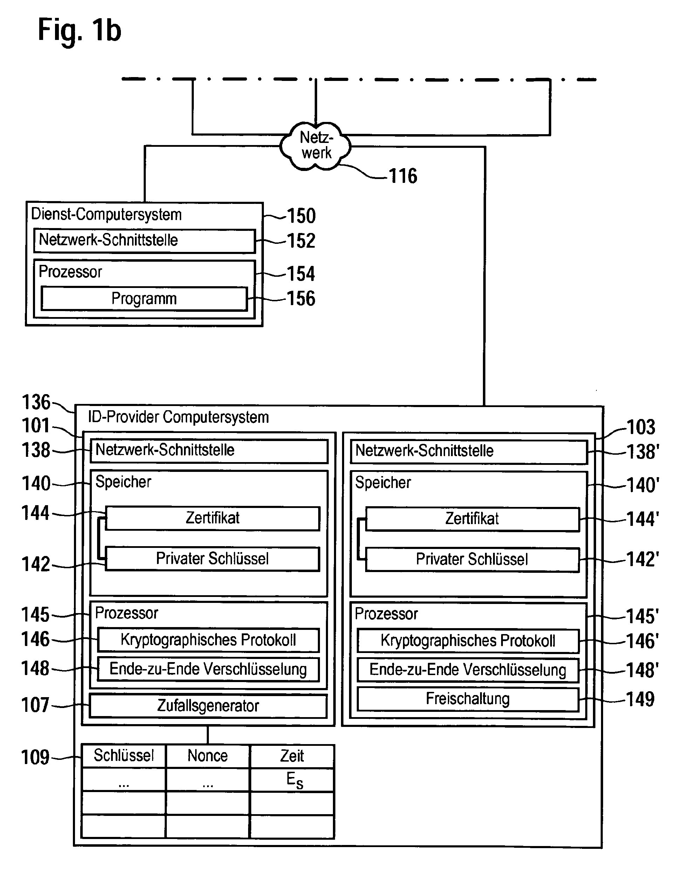

Die Figur 1 zeigt ein Nutzer-Computersystem 100 eines Nutzers 102. Das Nutzer-Computersystem 100 hat ein integriertes Lesegerät mit einer Schnittstelle 104 zur Kommunikation mit einem ID-Token 106, der eine entsprechende Schnittstelle 108 aufweist. Alternativ kann das Lesegerät auch als separates Peripheriegerät ausgebildet sein, dass z.B. an eine USB-Schnittstelle des Nutzer-Computersystems 100 angeschlossen ist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine sogenannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d. h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptografischen Protokolls zur Authentifizierung eines ID-Provider-Computersystems 136 gegenüber dem ID-Token 106. Bei dem kryptografischen Protokoll kann es sich um ein Challenge-Response-Protokoll basierend auf einem symmetrischen Schlüssel oder einem asymmetrischen Schlüsselpaar handeln.

Beispielsweise wird durch das kryptografische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptografischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d. h. auch der ID-Token 106 muss sich dann gegenüber dem ID-Provider-Computersystem 136 nach demselben oder einem anderen kryptografischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Personalisierungsinformation, wie z.B. von Attributen. Für die Ende-zu-Ende-Verschlüsselung kann ein symmetrischer Schlüssel verwendet werden, der beispielsweise anlässlich der Ausführung des kryptografischen Protokolls zwischen dem ID-Token 106 und dem ID-Provider-Computersystem 136 vereinbart wird.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert sind. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptografischen Protokolls ausgeführt. Insgesamt wird also das kryptografische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung aufseiten des ID-Provider-Computersystems 136, beispielsweise basierend auf dem symmetrischen Schlüssel, der anlässlich der Ausführung des kryptografischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem sogenannten Trust-Center, sodass das ID-Provider-Computersystem 136 in Kombination mit der Notwendigkeit der Authentifizierung des Nutzers 102 gegenüber dem ID-Token 106 den Vertrauensankerfür die Authentizität der aus dem ID-Token 106 ausgelesenen Attribute bildet.

Bei der hier betrachteten Ausführungsform beinhaltet das ID-Provider-Computersystem 136 einen ersten Server 101 und einen zweiten Server 103. Bei den Servern 101 und 103 kann es sich um separate Hardwareeinheiten handeln, die innerhalb des ID-Provider-Computersystems 136 zum Beispiel über einen Datenbus oder ein Ethernet kommunizieren, oder um virtuelle Server, die auf einer gemeinsamen Hardware des ID-Provider-Computersystems 136 ausgeführt werden. Ferner ist es auch möglich, dass die Server 101 und 103 auf mehreren Hardwareeinheiten verteilt implementiert sind und intern innerhalb des ID-Provider-Computersystems 136 oder über das externe Netzwerk 116 miteinander kommunizieren.

Bei der hier betrachteten Ausführungsform beinhaltet der Server 101 die Netzwerk-Schnittstelle 138, den Speicher 140 sowie den Prozessor 145. In dem Zertifikat 144 sind die Leserechte des Servers 101 zum Lesen zum Beispiel der rID aus dem Speicherbereich 162 und/oder von zumindest einem der Attribute aus dem Speicherbereich 124 des ID-Tokens 106 spezifiziert. Das Zertifikat 144 kann zu einer ersten PKI gehören, die zum Beispiel die gesetzlichen Erfordernisse zum Zugriff auf maschinenlesbare Reisedokumente erfüllt.

Der erste Server 101 hat ferner einen Zufallsgenerator 107 zur Erzeugung einer Nonce. Der Zufallsgenerator 107 kann als Hardware-Zufallsgenerator ausgebildet sein oder als Programm, welches dann beispielsweise von dem Prozessor 145 ausgeführt werden kann.

Der Server 101 ist ferner mit einer Datenbank 109 verbunden, die zur Speicherung von Nonces dient. Zu jeder Nonce kann in der Datenbank 109 ein Zeitstempel gespeichert werden, der die Zeit tₛ angibt, zu der die Nonce in der Datenbank 109 gespeichert wurde oder zu der die Nonce von dem Zufallsgenerator 107 erzeugt wurde oder zu der die rID und/oder das zumindest eine Attribut von dem Server 101 aus dem ID-Token 106 gelesen worden ist.

Der Server 103 kann im Wesentlichen gleich aufgebaut sein wie der Server 101 und beispielsweise eine Netzwerk-Schnittstelle 138', einen Speicher 140' und einen Prozessor 145' zur Ausführung von Programminstruktionen 146' und 148' umfassen, welche jeweils analog zu denen des Servers 101 ausgebildet sind. Das Zertifikat 144' kann die Schreib- und Leserechte des Servers 103 zum Schreiben der Personalisierungsinformation und der Nonce in ein Secure Element sowie zum Lesen der Personalisierungsinformation oder eines daraus abgeleiteten Wertes und der Nonce aus dem Secure Element spezifizieren. Das Zertifikat 144' kann zu einer anderen PKI gehören als das Zertifikat 144.

Der Prozessor 145' dient zusätzlich zur Ausführung von Programminstruktionen 149' zur Verifizierung der in dem Secure Element gespeicherten Personalisierungsinformation und gegebenenfalls zur Erzeugung eines Freischaltsignals.

Ein Dienst-Computersystem 150 kann zur Entgegennahme einer Personalisierungsanforderung ausgebildet sein. Beispielsweise kann der Nutzer 102 online über das Netzwerk 116 eine Personalisierungsanforderung zur Personalisierung eines Secure Element 158 des Nutzers 102 an das Dienst-Computersystem 150 senden.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seine Personalisierungsanforderung eingeben kann.

Der Prozessor 128 des ID-Tokens 106 kann zur Ausführung von Programminstruktionen 160 ausgebildet sein, die zur Erzeugung eines ID-Token-Pseudonyms dienen, beispielsweise einer rID. Die rID kann in einem geschützten Speicherbereich 162 des elektronischen Speichers 118 oder temporär in einem Arbeitsspeicher des Prozessors 128 gespeichert sein.

Wesentlich ist, dass die gegen unerlaubten Zugriffe und Manipulationen zu schützende Personalisierungsinformation des ID-Tokens 106, das heißt die Attribute und gegebenenfalls der rID, so in dem ID-Token 106 gespeichert sind, dass ein externer Zugriff über die Schnittstelle 108 nicht möglich ist, sondern dass nur der Prozessor 128 intern einen lesenden oder schreibenden Zugriff auf die Personalisierungsinformation durchführen kann.

Das Lesegerät des Nutzer-Computersystems 100 hat eine weitere Schnittstelle 105. Während die Schnittstelle 104 einen ersten Datenübertragungsstandard implementiert, wie zum Beispiel einen RFID-Standard, so wird durch die zweite Schnittstelle 105 ein zweiter Datenübertragungsstandard implementiert, wie zum Beispiel ein NFC-Standard. Dies ermöglicht eine Kommunikation des Nutzer-Computersystems 100 mit dem Secure Element 158, welches eine Schnittstelle 164 aufweist, die ebenfalls den zweiten Datenübertragungsstandard, wie zum Beispiel NFC, implementiert.

Das Secure Element 158 kann eine weitere Schnittstelle 166 aufweisen, bei der es sich vorzugsweise um eine kontaktbehaftete Schnittstelle handelt, wohingegen die Schnittstellen 164 und 108 bzw. die Schnittstellen 104 und 105 jeweils vorzugsweise für eine kontaktlose Datenübertragung ausgebildet sind.

Das Secure Element 158 kann als Chipkarte ausgebildet sein, die dazu dient, in einen Chipkarten-Leser eines Mobilfunkgeräts 168, der eine entsprechende kontaktbehaftete Schnittstelle 170 aufweist, eingeschoben zu werden. Insbesondere kann es sich bei dem Secure Element 158 um eine Micro-SD-Karte mit einem integrierten NFC-Chip und einer entsprechenden mit dem NFC-Chip verbundenen NFC-Antenne handeln.

Das Mobilfunkgerät 168 hat eine Mobilfunk-Schnittstelle 172, über die zum Beispiel eine Internetverbindung über das Netzwerk 116 zu einem Application (App)-Server 174 aufgebaut werden kann. Auf dem App-Server 174 befinden sich mehrere Anwendungsprogramme, das heißt sogenannte Apps, von denen eine App 176 in der Figur 1 exemplarisch gezeigt ist.

Der Nutzer 102 kann das Secure Element 158 im Handel erwerben. Das Secure Element 158 befindet sich dann in einem Erstbenutzungszustand, in dem bereits Programminstruktionen 130' für den Übergang von dem Erstbenutzungszustand in einen Benutzt-Zustand und die Nutzerauthentifizierung in dem Secure Element 158 gespeichert sein können sowie optional auch ein privater Schlüssel in dem geschützten Speicherbereich 122' sowie ein Zertifikat in dem Speicherbereich 126' des elektronischen Speichers 118' des Secure Elements 158, welches eine Hardwarearchitektur haben kann, welche prinzipiell analog zu der Architektur des ID-Tokens 106 ist.

Der Übergang von dem Erstbenutzungszustand zu dem Benutzt-Zustand kann durch Eingabe einer Transport-PIN, 0-PIN oder Leer-PIN erfolgen, wie es an sich aus dem Stand der Technik bekannt ist, vergleiche zum Beispiel DE 35 23 237 A1, DE 195 07 043 A1, DE 195 07 044 C2, DE 198 50 307 C2, EP 0 730 253 B1, DE 198 50 307 C2, DE 10 2007 008 652 und DE 10 2007 008 651.

Bei diesem Übergang vergibt der Nutzer 102 seine PIN, die in dem geschützten Speicherbereich 120' des Secure Elements 158 gespeichert wird.

Der elektronische Speicher 118' des Secure Elements 158, bei dem es sich um einen nicht-flüchtigen elektronischen Speicher handelt, hat einen Speicherbereich 182 zur Speicherung einer Information F, die angibt, ob das Secure Element 158 zur Verwendung durch ein Terminalprogramm 184 freigeschaltet ist. Beispielsweise bedeutet F = 0, dass das Secure Element 158 nicht freigeschaltet ist, wohingegen F = 1 bedeutet, dass das Secure Element 158 personalisiert, verifiziert und freigeschaltet ist, sodass das Terminalprogramm 184 das Secure Element 158 verwenden kann. Das Terminalprogramm 184 kann zum Beispiel auf dem Smartphone 168 oder einem anderen Host, wie zum Beispiel einem Bankautomaten oder auf dem Dienst-Computersystem 150 installiert sein.

Das Secure Element 158 hat ferner einen Speicherbereich 163 zur Speicherung einer Nonce. Der Speicherbereich 163 braucht nicht notwendigerweise nicht-flüchtig zu sein, da die Nonce ohnehin temporärer Natur ist.

Zur Personalisierung des Secure Elements 158 mit einem oder mehreren der Attribute, die in dem geschützten Speicherbereich 124 des ID-Tokens 106 gespeichert sind, und/oder mit dem ID-Token-Pseudonym des ID-Tokens 106, insbesondere der rID, führt der Nutzer 102 das Secure Element 158 in die Schnittstelle 170 des Mobilfunkgeräts 168 ein und stellt über die Mobilfunkschnittstelle 172 eine Verbindung zu dem App-Server 174 her.

Die App 176 wird dann von dem App-Server 174 über das Netzwerk 116 zu dem Mobilfunkgerät 168 übertragen und von dort über die Schnittstelle 170 zu der Schnittstelle 166 des Secure Elements 158, sodass die App auf dem Secure Element 158 zur Ausführung durch den Prozessor 128' des Secure Elements 158' gespeichert wird. Beispielsweise sendet der App-Server 174 die App 176 an eine vertrauenswürdige Instanz (Trusted Service Manager - TSM) die entweder alleine oder in Zusammenarbeit mit dem Herausgeber des Secure Elements die Installation übernimmt.

Die App 176 beinhaltet Programminstruktionen 132' und 134' für die Ende-zu-Ende-Verschlüsselung bzw. zur Durchführung eines kryptografischen Protokolls, welche in ihrer Funktionalität analog zu den entsprechenden Programminstruktionen 132 und 134 des ID-Tokens 106 sind.

Nach dem Übergang von dem Erstbenutzungsstatus in den Benutzt-Status und nach dem Laden der App 176 auf das Secure Element 158 ist dieses nunmehr für die Durchführung der Personalisierung vorbereitet. Hierzu kann nun wie folgt vorgegangen werden:
**i) Speicherung der Personalisierungsinformation in dem Secure Element 158 durch:**
   **a) Auslesen von Personalisierungsinformation aus dem ID-Token 106**
      1. Personalisierungsanforderung
         Der Nutzer 102 stellt eine Verbindung zwischen seinem Nutzer-Computersystem 100 und dem Dienst-Computersystem 150 über das Netzwerk 116 her, indem er beispielsweise einen von den Programminstruktionen 116 implementierten Internetbrowser startet und die URL einer Webseite des Dienst-Computersystems 150 eingibt; hierdurch wird eine Internet Session gestartet. In diese Webseite gibt der Nutzer 102 dann über das Nutzer-Computersystem 100 eine Personalisierungsanforderung zur Personalisierung des Secure Elements 158 ein. Diese Personalisierungsanforderung wird von dem Dienst-Computersystem 150 über das Netzwerk 116 entweder unmittelbar oder über das Nutzer-Computersystem 100 an das ID-Provider-Computersystem 136 weitergeleitet.
      2. Authentifizierung des Nutzers 102 gegenüber dem ID-Token 106.
         Der Nutzer 102 bringt den ID-Token 106 in die Reichweite der Schnittstelle 104 des Lesegeräts und authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
      3. Authentifizierung des ID-Provider-Computersystems 136 gegenüber dem ID-Token 106.
         Hierzu wird eine Verbindung zwischen dem ID-Token 106 und dem ID-Provider-Computersystem 136, d.h. dem Server 101, über das Nutzer-Computersystem 100, insbesondere die Schnittstelle 104, und das Netzwerk 116 hergestellt. Beispielsweise überträgt der Server 101 sein Zertifikat 144 über diese Verbindung an den ID-Token 106.
         Durch die Programminstruktionen 134 wird dann eine sogenannte Challenge generiert, d. h. beispielsweise eine Zufallszahl. Diese Zufallszahl wird mit dem in dem Zertifikat 144 beinhalteten öffentlichen Schlüssel des Servers 101 verschlüsselt. Das resultierende Chiffrat wird von dem ID-Token 106 über die Verbindung an den Server 101 gesendet. Der Server 101 entschlüsselt das Chiffrat mithilfe seines privaten Schlüssels 142 und erhält so die Zufallszahl. Die Zufallszahl sendet der Server 101 über die Verbindung an den ID-Token 106 zurück. Durch Ausführung der Programminstruktionen 134 wird dort geprüft, ob die von dem Server 101 empfangene Zufallszahl mit der ursprünglich generierten Zufallszahl, d. h.. der Challenge, übereinstimmt. Ist dies der Fall, so gilt der Server 101 als gegenüber dem ID-Token 106 authentifiziert. Die Zufallszahl kann als symmetrischer Schlüssel für die Ende-zu-Ende Verschlüsselung verwendet werden.
         Vorzugsweise ist die Authentifizierung gegenseitig, d.h. auch der ID-Token 106 authentifiziert sich gegenüber dem Server 101, beispielsweise mittels dem privaten Schlüssel 122.
      4. Prüfung Leseberechtigung und Lesezugriff
         Nachdem sich der Nutzer 102 erfolgreich gegenüber dem ID-Token 106 authentifiziert hat, und nachdem sich der Server 101 erfolgreich gegenüber dem ID-Token 106 authentifiziert hat, prüft der ID-Token 106 anhand des Zertifikats 144, ob der Server 101 die zum Lesen der Personalisierungsinformation erforderlichen Leserechte hat. Wenn dies der Fall ist, wird die angeforderte Personalisierungsinformation von dem Prozessor 128 aus dem geschützten Speicherbereich 124 ausgelesen und durch Ausführung der Programminstruktionen 132 verschlüsselt. Die verschlüsselte Personalisierungsinformation wird über die Verbindung an den Server 101 übertragen und dort durch Ausführung der Programminstruktionen 148 entschlüsselt. Dadurch erhält der Server 101 Kenntnis der aus dem ID-Token 106 ausgelesenen Personalisierungsinformation. Das ID-Provider-Computersystem 136 kann die Personalisierungsinformation dann an den Server 103 übergeben, z.B. über eine geschützte Verbindung über das Netzwerk 116 oder innerhalb des ID-Provider-Computersystems 136.
         Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend der Server 101. Es ist aber grundsätzlich auch möglich, dass sich zunächst der Server 101 gegenüber dem ID-Token 106 authentifizieren muss und erst nachfolgend der Nutzer 102.
   **b) Erzeugung einer Nonce durch den Server 101 für die aus dem ID-Token 106 ausgelesene Personalisierungsinformation:**
      Hierzu wird durch den Zufallsgenerator 107 eine Nonce erzeugt.
   **c) Speicherung der Nonce:**
      Die Nonce wird dann von dem Server 101 in der Datenbank 109 gespeichert, wobei die Personalisierungsinformation oder ein daraus abgeleiteter Wert als Zugriffsschlüssel dient. Bei dem abgeleiteten Wert kann es sich zum Beispiel um einen Hashwert der Personalisierungsinformation handeln. Zusätzlich kann ein Zeitstempel, das heißt die Zeit tₛ, in dem entsprechenden Datenbankeintrag der Datenbank 109, der die Nonce enthält, gespeichert werden.
   **d) Schreiben der Personalisierungsinformation und der Nonce in das Secure Element 158**
      1. Die Personalisierungsinformation und die Nonce werden innerhalb des ID-Provider-Computersystem 136 oder über das Netzwerk 116 von dem Server 101 zu dem Server 103 übertragen. Das ID-Provider-Computersystem 136, nämlich der Server 103, generiert eine Anforderung, die über das Netzwerk 116 an das Nutzer-Computersystem 100 übertragen wird, um den Nutzer 102 dazu aufzufordern, das Secure Element 158 in die Reichweite der Schnittstelle 105 zu bringen.
         Alternativ fordert das Dienst-Computersystem 150 den Nutzer 102 dazu auf, das Secure Element 158 in die Reichweite der Schnittstelle 105 zu bringen; dies kann über die Internet Session erfolgen. Ferner generiert das Dienst-Computersystem 150 eine Anfrage an das ID-Provider-Computersystem 136, nämlich den Server 103, zum Schreiben der Personalisierungsinformation, wobei diese Anfrage die Personalisierungsinformation beinhaltet, beispielsweise also die rID und/oder andere Attribute. Ferner kann diese Anfrage die Anzahl der zu generierenden Token, insbesondere U-Prove Token, spezifizieren.
         Die nachfolgenden Schritte 2 - 4 zum Schreiben der Personalisierungsinformation und der Nonce in das Secure Element 158 werden analog zu den oben dargestellten Schritten 2 - 4 zum Lesen der Personalisierungsinformation aus dem ID-Token 106 durchgeführt:
      2. Authentifizierung des Nutzers 102 gegenüber dem Secure Element 158.
         Der Nutzer 102 bringt das Secure Element 158 in die Reichweite der Schnittstelle 105 des Lesegeräts und authentifiziert sich gegenüber dem Secure Element 158. Bei einer Implementierung mit PIN gibt der Nutzer 102 hierzu seine PIN für das Secure Element 158, beispielsweise über das Nutzer-Computersystem 100 oder einen daran angeschlossenen Chipkarten-Terminal ein. Durch Ausführung der Programminstruktionen 130' prüft dann der Secure Element 158 die Korrektheit der eingegebenen PIN. Wenn die eingegebene PIN mit dem in dem geschützten Speicherbereich 120' gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
      3. Authentifizierung des Servers 103 gegenüber dem Secure Element 158.
         Hierzu wird eine Verbindung zwischen dem Secure Element 158 und dem Servers 103 über das Nutzer-Computersystem 100, insbesondere die Schnittstelle 105, und das Netzwerk 116 hergestellt. Beispielsweise überträgt der Server 103sein Zertifikat 144' über diese Verbindung an den Secure Element 158. Durch die Programminstruktionen 134' wird dann eine sogenannte Challenge generiert, d. h.. beispielsweise eine Zufallszahl. Diese Zufallszahl wird mit dem in dem Zertifikat 144' beinhalteten öffentlichen Schlüssel des Servers 103 verschlüsselt. Das resultierende Chiffrat wird von dem Secure Element 158 über die Verbindung an den Server 103 gesendet. Der Server 103 entschlüsselt das Chiffrat mithilfe seines privaten Schlüssels 142' und erhält so die Zufallszahl. Die Zufallszahl sendet der Server 103 über die Verbindung an den Secure Element 158 zurück. Durch Ausführung der Programminstruktionen 134' wird dort geprüft, ob die von dem Server 103 empfangene Zufallszahl mit der ursprünglich generierten Zufallszahl, d. h.. der Challenge, übereinstimmt. Ist dies der Fall, so gilt der Server 103 als gegenüber dem Secure Element 158 authentifiziert. Die Zufallszahl kann als symmetrischer Schlüssel für die Ende-zu-Ende Verschlüsselung verwendet werden.
         Vorzugsweise ist die Authentifizierung gegenseitig, d.h. auch das Secure Element 158 authentifiziert sich gegenüber dem Server 103. Hierdurch wird sicher gestellt wird, dass die Personalisierungsinformation auch tatsächlich in einem Secure Element gespeichert wird. Für die Authentifizierung des Secure Element 158 kann ebenfalls ein Challenge-Response-Verfahren zum Einsatz kommen, wobei das Secure Element 158 den privaten Schlüssel 122' verwendet, welcher symmetrisch oder asymmetrisch sein kann.
      4. Prüfung Schreibberechtigung und Schreibzugriff
         Nachdem sich der Nutzer 102 erfolgreich gegenüber dem Secure Element 158 authentifiziert hat, und nachdem sich der Server 103 erfolgreich gegenüber dem Secure Element 158 authentifiziert hat, prüft der Secure Element 158 anhand des Zertifikats 144', ob der Server 103 die zum Schreiben der Personalisierungsinformation und der Nonce erforderliche Schreibberechtigung hat. Wenn dies der Fall ist, werden die Personalisierungsinformation und die Nonce von dem Prozessor 145' durch Ausführung der Programminstruktionen 148' verschlüsselt und die verschlüsselte Personalisierungsinformation/Nonce wird von dem Server 103 über das Netzwerk 116 an das Secure Element 158 übertragen und dort durch Ausführung der Programminstruktionen 132' entschlüsselt. Der Prozessor 128' schreibt dann die Personalisierungsinformation und die Nonce in den geschützten Speicherbereich 124', wenn es sich um ein oder mehrere Attribute handelt, oder in den geschützten Speicherbereich 162', wenn es sich um den rID handelt.
         Das Zertifikat 144' beinhaltet also eine Angabe, dass der Server 103 zum Lesen und Schreiben von Personalisierungsinformation und der Nonce berechtigt ist. Dabei kann auch spezifiziert sein, auf welche der Personalisierungsinformationen, also etwa die rID und/oder auf welche der Attribute sich diese Lese- und Schreibberechtigung bezieht. Die Lese- und Schreibberechtigungen können auch in zwei unterschiedlichen Zertifikaten des Servers 103 angegeben werden, die dann für den Lese- bzw. Schreibzugriff gegenüber dem ID-Token 106 bzw. dem Secure Element 158 verwendet werden.
**ii) Verifizierung der in dem Secure Element 158 gespeicherten Personalisierungsinformation:**
   Um sicherzustellen, dass die aus dem ID-Token des Nutzers ausgelesene Personalisierungsinformation tatsächlich in dem Secure Element 158 des Nutzers gespeichert worden ist, und nicht etwa aufgrund eines Relay-Angriffs in einem anderen Secure Element, werden die folgenden Schritte durchgeführt, um zu prüfen, dass die Personalisierungsinformation des Nutzers tatsächlich in dessen Secure Element 158 gespeichert wurde:
   a) Zunächst wird der oben beschriebene Schritt i)a), das heißt das Auslesen der Personalisierungsinformation aus dem ID-Token 106 des Nutzers 102, nochmals durch den Server 101 durchgeführt.
      Vorzugsweise hat das Lesegerät des Nutzer-Computersystems 100 eine Nutzerschnittstelle, zum Beispiel mit einem Display. Das Lesegerät ist vorzugsweise dazu ausgebildet, auf seinem Display eine Information anzuzeigen, die es dem Nutzer ermöglicht, zu unterscheiden, ob das Auslesen der Personalisierungsinformation aus dem ID-Token 106 erstmalig gemäß Schritt i) a) oder nochmalig gemäß Schritt ii) a) erfolgt.
      Dies hat den Vorteil, dass der Nutzer den Auslesevorgang gemäß diesem Schritt ii) a) von dem in Schritt i) a) unterscheiden kann. Der Hintergrund ist folgender: Wird durch einen Relayangriff das Secure Element (SE) eines Angreifers personalisiert, merkt dies der Nutzer, da sein eigenes SE folglich nicht personalisiert wird. Der Angreifer kann dem Nutzer allerdings vortäuschen, dass der Dienst gerade eine Störung hatte und der Nutzer die Phase i) einfach noch einmal durchführen soll. Nun sollte sichergestellt werden, dass der Nutzer sich auch wirklich in Schritt i)a) und nicht in ii)a) befindet. Der Angreifer könnte sonst die in ii)a) ausgelesenen Daten dazu nutzen, sein gerade personalisiertes SE freizuschalten.
      Sofern es sich bei dem ID-Token um den ePA handelt, kann die Unterscheidung z.B. durch unterschiedliche Berechtigungszertifikate getroffen werden. Das Zertifikat für Schritt i)a) gilt z.B. für einen "Personalisierungsdienst" und für ii)a) gilt für einen "Verifikationsdienst". Mit anderen Worten hat das ID-Provider-Computersystem, d.h. der Server 101, zwei verschiedene Zertifikate, die für das Auslesen bzw. das nochmalige Auslesen zum Zwecke der Authentifizierung verwendet werden. Der Benutzer sieht dann auf dem Display, für welchen Dienst gerade die ePA-Attribute ausgelesen werden und weiß somit in welcher Phase er sich befindet.
   b) Der Server 101 greift dann mit der aus dem ID-Token 106 nochmals ausgelesenen Personalisierungsinformation oder einem daraus abgeleiteten Wert, wie zum Beispiel einem Hashwert, als Zugriffsschlüssel auf die Datenbank 109 zu, um die zu der Personalisierungsinformation gehörende Nonce gegebenenfalls mit dem Zeitstempel tₛ aus der Datenbank 109 auszulesen.
   c) Nun wird die Personalisierungsinformation und die Nonce aus dem Secure Element 158 durch den Server 103 ausgelesen, wozu analog zu dem oben unter i)d) beschriebenen Vorgang zum Schreiben der Personalisierungsinformation und der Nonce in das Secure Element 158 vorgegangen wird, mit dem Unterschied, dass hier die Personalisierungsinformation und die Nonce nicht geschrieben, sondern von dem Servercomputer 103 gelesen werden.
   d) Der Server 103 prüft nun, ob die aus dem Secure Element 158 ausgelesene Nonce mit der zuvor aus der Datenbank 109 ausgelesenen Nonce übereinstimmt. Ferner prüft der Server 103 auch, ob die aus dem ID-Token 106 nochmals ausgelesene Personalisierungsinformation und die aus dem Secure Element 158 ausgelesene Personalisierungsinformation übereinstimmen. Wenn dies der Fall ist, gilt das Secure Element 158 als verifiziert, das heißt es gilt damit als erwiesen, dass der Schreibvorgang in den obigen Schritt i)d) tatsächlich in das Secure Element 158 erfolgte und nicht in ein anderes aufgrund eines Relay-Angriffs infiltriertes Secure Element.

   Optional kann als weitere Voraussetzung für die Verifizierung vorgesehen sein, dass zwischen dem Zeitpunkt der Prüfung, ob die Nonces bzw. die Personalisierungsinformationen übereinstimmen, und dem Zeitstempel tₛ nicht mehr als ein vorgegebenes Zeitintervall vergangen ist. Dies dient als zusätzliche Sicherheit gegen Replay-Angriffe.
**iii) Freischaltung des personalisierten Secure Elements zur Verwendung durch ein Terminalprogramm**
   Nachdem nunmehr die Personalisierungsinformation in das Secure Element 158 geschrieben wurde und dieser Vorgang verifiziert wurde, kann nunmehr das Secure Element 158 zur Verwendung zum Beispiel durch das Terminalprogramm 184 freigeschaltet werden. Hierzu werden die folgenden Schritte durchgeführt:
   a) Durch den Server 103 wird ein Freischaltsignal erzeugt. Die Erzeugung des Freischaltsignals wird dann ausgelöst, wenn die Verifizierung erfolgreich abgeschlossen ist.
   b) Das Freischaltsignal wird von dem Server 103 über das Netzwerk 116 an das Secure Element 158 übertragen, und zwar über eine gesicherte Verbindung, wie zum Beispiel über die zuvor in dem Schritt ii)a) aufgebaute Verbindung mit Ende-zu-Ende-Verschlüsselung. Aufgrund des Freischaltsignals wird in dem Secure Element 158 in dem Speicherbereich 182 eine Information gespeichert, die den freigeschalteten Zustand des Secure Elements 158 für die Verwendung durch ein Terminalprogramm angibt. Beispielsweise wird ein in den Speicherbereich 182 gespeichertes Flag F von logisch 0 auf logisch 1 gesetzt, um diese Zustandsänderung des Secure Elements anzuzeigen.

Im Weiteren kann dann zum Beispiel das Terminalprogramm 184 zum Beispiel eine Chipkartenfunktion des Secure Elements 58 benutzen. Je nach Ausführungsform muss sich der Nutzer 102 zunächst gegenüber dem Secure Element 158 authentifizieren, um eine Kommunikation zwischen dem Secure Element 158 und dem Terminalprogramm 84 zu ermöglichen. Das Terminalprogramm 184 fragt dann zunächst den logischen Wert des in dem Speicherbereich 182 gespeicherten Flags F ab. Wenn dieser Wert F = 0 ist, so bricht das Terminalprogramm 184 die weitere Kommunikation ab. Ist hingegen der Wert von F = 1, so generiert das Terminalprogramm 184 zum Beispiel eine Kommando-APDU, um eine bestimmte Chipkartenfunktion des Secure Elements 158 aufzurufen, welche die zuvor in dem Secure Element 158 gespeicherte Personalisierungsinformation, wie zum Beispiel die rID und/oder ein Attribut aus den Speicherbereichen 124' bzw. 162' verwendet.

Der Nutzer 102 erhält auf diese Art und Weise in Form des personalisierten Secure Elements 158 einen personalisierten Sicherheitstoken, der von dem ID-Token 106 abgeleitet ist, und der im Wesentlichen dasselbe Maß an Vertrauenswürdigkeit und Sicherheit aufweist wie der ID-Token 106. Von besonderem Vorteil ist nun, dass der Nutzer 102 das Secure Element 158 mit dem Mobilfunkgerät 168 verwenden kann, dessen Schnittstelle 170 nicht mit der Schnittstelle 108 des ID-Tokens 106 kompatibel ist. Von besonderem Vorteil ist dabei ferner, dass es sich bei dem Mobilfunkgerät 158 nicht um ein NFC-fähiges Smartphone handeln muss, sondern auch um ein Mobilfunkgerät älterer Bauart.

Insbesondere kann die Personalisierungsinformation, die in das Secure Element 158 geschrieben worden ist, für die Erzeugung eines U-Prove-Tokens verwendet werden, wobei das Dienst-Computersystem 150 die Rolle des "Issuers" gemäß dem U-Prove-Protokoll übernehmen kann.

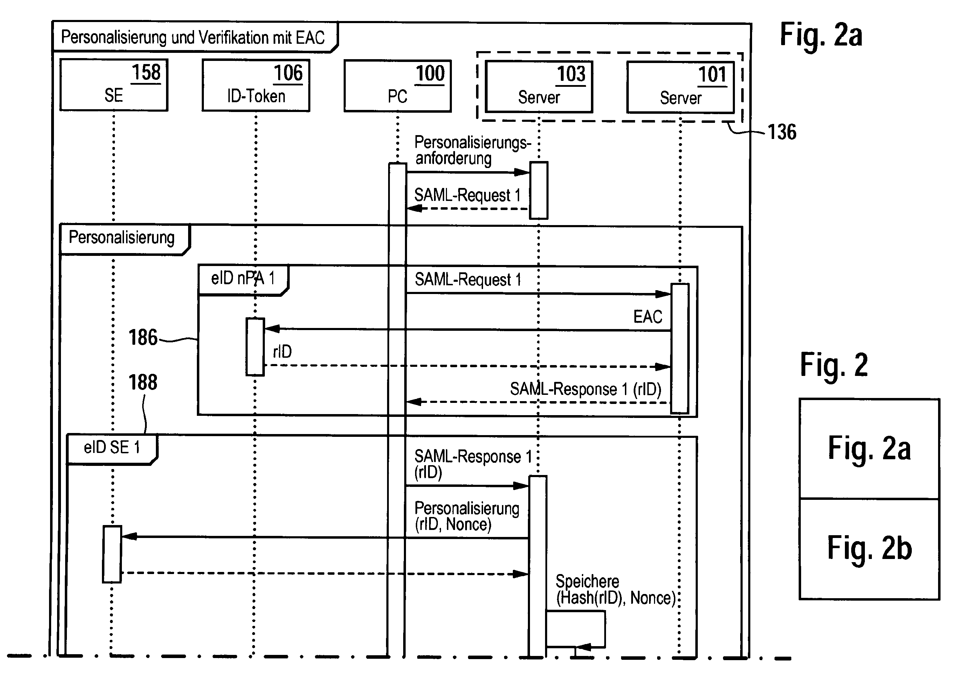

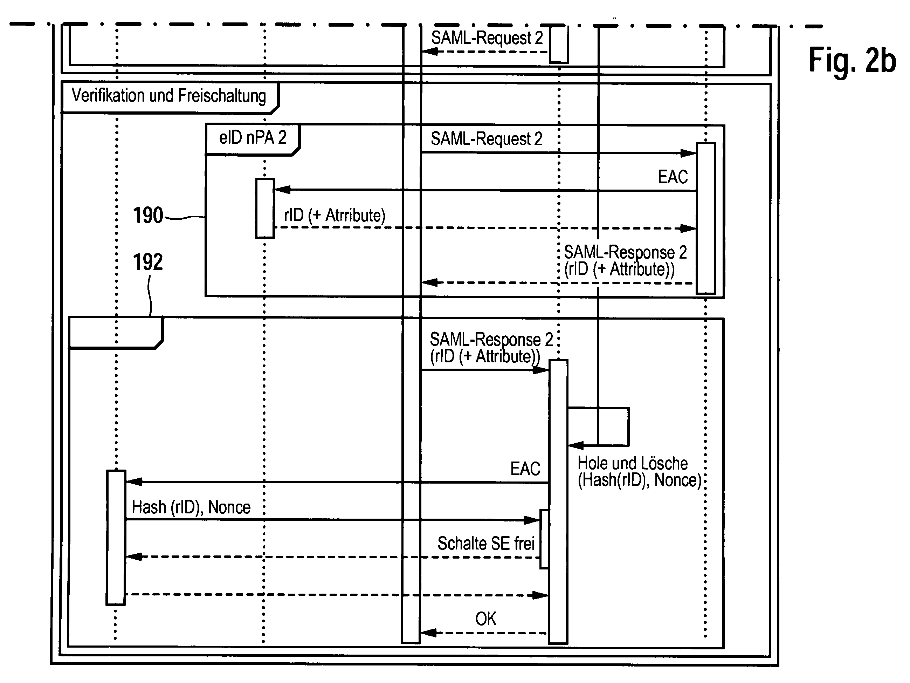

Die Figur 2 zeigt eine Ausführungsform eines erfindungsgemäßen Verfahrens anhand eines UML-Diagramms. Bei dieser Ausführungsform beinhaltet das ID-Provider-Computersystem 136 den Server 101 zur Kommunikation mit dem ID-Token 106 und den Server 103 zur Kommunikation mit dem Secure Element 158. Die Funktionen der Server 101 und 103 können aber - je nach Ausführungsformauch durch einen einzigen Server realisiert werden, der ein entsprechendes Zertifikat mit der erforderlichen Leseberechtigung für den ID-Token 106 und der Schreibund Leseberechtigung für das Secure Element 158 hat.. Die Server 101 und 103 können als getrennte Hardwareeinheiten oder auf logischer Ebene in dem ID-Provider-Computersystem 136 implementiert sein.

Zur Personalisierung des Secure Elements 158 wird zunächst eine Personalisierungsanforderung von dem Nutzer-Computersystem 100 über das Netzwerk 116 an den Server 103 gesendet. Alternativ kann die Personalisierungsanforderung auch an das Dienst-Computersystem 150 gesendet werden (vgl. Fig. 1). Sowohl der Server 103 als auch das Dienst-Computersystem 150 können die Rolle des Issuer gemäß dem U-Prove-Protokoll haben. Der Server 103 bzw. das Dienst-Computersystem 150 antwortet auf diese Personalisierungsanforderung mit der Erzeugung eines ersten SAML-Request, das heißt dem SAML-Request 1, welcher die Personalisierungsanforderung beinhaltet.

Dieser SAML-Request 1 wird von dem Server 103 an das Nutzer-Computersystem 100 gesendet und von dort z.B. über das Netzwerk 116 an den Server 101 weitergeleitet. Daraufhin authentifizieren sich der Nutzer 102 und der Server 101 gegenüber dem ID-Token 106 und der ID-Token 106 überprüft die Leseberechtigung des Server 101 anhand von dessen Zertifikat, beispielsweise nach dem Extended Access Control Protocol.

Wenn die Authentifizierungen erfolgreich sind, und die erforderliche Leseberechtigung vorliegt, so liest der Server 101 die Personalisierungsinformation, das heißt zum Beispiel die rID sowie weitere Attribute, und erzeugt eine SAML-Response, d.h. die SAML-Response 1, die diese Personalisierungsinformation beinhaltet. Diese SAML-Response 1 sendet der Server 101 an das Nutzer-Computersystem 100, von wo aus die SAML-Response an den Server 103 weitergeleitet wird.

Damit ist der Lesevorgang 186 zum Auslesen der Personalisierungsinformation aus dem ID-Token 106, das heißt der Vorgang "eID nPA1" abgeschlossen. Anschließend erfolgt das Schreiben der Personalisierungsinformation in das Secure Element 158 in dem als "eID SE1" bezeichneten Vorgang 188. Hierzu werden die folgenden Schritte durchgeführt:
Aufgrund des Empfangs der SAML-Response 1 durch den Server 103 erzeugt dieser eine Nonce für die empfangene Personalisierungsinformation, das heißt beispielsweise die rID. Anschließend erfolgt eine Authentisierung des Nutzers gegenüber dem Secure Element 158 sowie eine gegenseitige Authentifizierung des Secure Elements 158 und des Servers 103 und der Server 103 schreibt dann, nachdem diese Authentifizierungen erfolgreich durchgeführt worden sind und nachdem der Server 103 seine Schreibberechtigung mithilfe seines Zertifikats 144' gegenüber dem Secure Element 158 nachgewiesen hat, die Personalisierungsinformation mit der dazugehörigen Nonce in das Secure Element 158. Nach Empfang einer entsprechenden Bestätigung hinsichtlich der erfolgreichen Durchführung des Speichervorgangs von dem Secure Element 158 speichert der Server 103 die Nonce in der Datenbank 109 (vergleiche Figur 1), wobei hier ein Hashwert der Personalisierungsinformation als Schlüssel für die Speicherung der Nonce in der Datenbank 109 verwendet wird.

Der Server 103 erzeugt dann einen weiteren SAML-Request, das heißt den SAML-Request 2, um die Verifikation der abgespeicherten Personalisierungsinformation anzufordern. Der SAML-Request 2 wird von dem Server 103 über das Netzwerk an das Nutzer-Computersystem 100 gesendet, von wo aus der SAML-Request 2 an den Server 101 weitergeleitet wird, womit der Vorgang 188 abgeschlossen ist.

Aufgrund des SAML-Requests 2 wird der mit eID nPA bezeichnete Vorgang 190 durchgeführt, welcher analog zu dem Vorgang 186 ist, sodass der Server 101 dementsprechend eine weitere SAML-Response 2 erzeugt, die dieselbe Personalisierungsinformation wie die SAML-Response 1 beinhaltet. Anschließend wird der eigentliche Verifikations- und Freischaltungsvorgang durchgeführt (Vorgang 192), indem nämlich der Server 103 mithilfe der Personalisierungsinformation bzw. dem Hashwert der mit der SAML-Response 2 empfangenen Personalisierungsinformation auf die Datenbank 109 zugreift, um die Nonce daraus auszulesen. Anschließend greift der Server 103 nach Durchführung der entsprechenden Authentifizierungen und Prüfung der Leseberechtigung auf das Secure Element 158 zu, um die in dem Secure Element 158 zuvor in eID SE1 gespeicherte Nonce und die Personalisierungsinformation bzw. den von dem Secure Element 158 erzeugten Hashwert der Personalisierungsinformation auszulesen. Wenn dieser von dem Secure Element 158 gelieferte Hashwert und die Nonce mit dem Hashwert und der entsprechenden Nonce der Datenbank 109 übereinstimmen, so erzeugt der Server 103 daraufhin ein Freischaltsignal, welches von dem Server 103 über das Netzwerk zu dem Secure Element 158 übertragen wird, sodass der Wert des Flag F auf logisch 1 gesetzt wird. Das Secure Element 158 bestätigt diese Freigabe dann gegenüber dem Server 103, welcher diese Bestätigung an das Nutzer-Computersystem 100 weiterleitet.

Vorzugsweise hat das Lesegerät des Nutzer-Computersystems 100 eine Nutzerschnittstelle, zum Beispiel mit einem Display und einer Tastatur. Das Lesegerät ist so ausgebildet, dass es vor der Durchführung des Schreibvorgangs ein Abfragesignal generiert, welches auf dem Display angezeigt wird. Erst nachdem der Nutzer 102 eine Bestätigung, zum Beispiel über die Tastatur des Lesegeräts eingegeben hat, wird der Schreibvorgang tatsächlich durchgeführt. Zur Bestätigung kann der Nutzer z.B. eine PIN eingeben. Hierdurch ist eine zusätzliche Sicherheit, zum Beispiel gegen einen Man-in-the-middle-Angriff, gegeben, für den Fall etwa, dass die zwischen dem Nutzer-Computersystem 100 und dem Dienst-Computersystem 150 aufgebaute Internetsession auf den Computer eines Dritten übertragen worden ist. Entsprechendes gilt für den Lesevorgang.

Die Erzeugung des oder der U-Prove Token führt das ID-Provider-Computersystem zusammen mit dem Secure Element 158 durch und zwar gemäß dem U-Prove Protokoll.

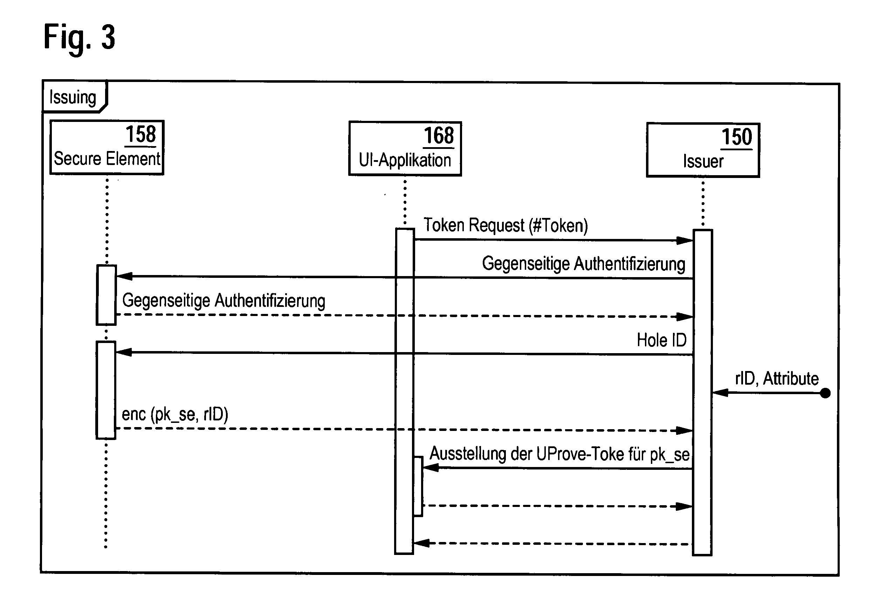

Die Figur 3 zeigt ein UML-Diagramm hinsichtlich der anschließenden Erzeugung eines Device Protected U-Prove-Tokens mithilfe des personalisierten und freigeschalteten Secure Elements 158. Hierzu wird ein Token-Request mit einer Angabe der Anzahl der zu erzeugenden U-Prove-Token von dem Smartphone 168 erzeugt und zum Beispiel an das Dienst-Computersystem 150, welches hier als Issuer im Rahmen des U-Prove-Protokolls fungiert, übertragen. Das Dienst-Computersystem 150 empfängt die Personalisierungsinformation, wie zum Beispiel den Restricted Identifier (rID) und/oder zumindest ein Attribut (beispielsweise von dem ID-Provider-Computersystem). Alternativ kann auch beispielsweise der Server 103 als Issuer dienen, da dieser ohnehin bereits über diese Personalisierungsinformation verfügt.

Zwischen dem Issuer, das heißt beispielsweise dem Dienst-Computersystem 150, und dem Secure Element 158, erfolgt dann eine gegenseitige Authentifizierung. Nach erfolgreicher gegenseitiger Authentifizierung sendet das Dienst-Computersystem 150 das Kommando "Hole ID" an das Secure Element 158. Das Secure Element 158 antwortet auf dieses Kommando mit dem rID und seinem öffentlichen Schlüssel pk_se, welche über einen verschlüsselten Kanal von dem Secure Element 158 an das Dienst-Computersystem 150 übertragen werden. Aufgrund dieser Informationen erzeugt das Dienst-Computersystem 150 dann den oder die gewünschten U-Prove-Token für pk_se nach dem U-Prove-Protokoll.

### Bezugszeichenliste

- 100: Nutzer-Computersystem
- 101: Server
- 102: Nutzer
- 103: Server
- 104: Schnittstelle
- 105: Schnittstelle
- 106: ID-Token
- 107: Zufallsgenerator108 Schnittstelle
- 109: Datenbank
- 110: Prozessor
- 112: Programminstruktionen
- 114: Netzwerk-Schnittstelle
- 116: Netzwerk
- 118: elektronischer Speicher
- 118': elektronischer Speicher
- 120: geschützter Speicherbereich
- 120': geschützter Speicherbereich
- 122: geschützter Speicherbereich
- 122': geschützter Speicherbereich
- 124: geschützter Speicherbereich
- 124': geschützter Speicherbereich
- 126: Speicherbereich
- 126': Speicherbereich
- 128: Prozessor
- 128': Prozessor
- 130: Programminstruktionen
- 130': Programminstruktionen
- 132: Programminstruktionen
- 132': Programminstruktionen
- 134: Programminstruktionen
- 134': Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149': Programminstruktionen
- 150: Dienst-Computersystem
- 152: Netzwerk-Schnittstelle
- 154: Prozessor
- 156: Programminstruktionen
- 158: Secure Element
- 160: Programminstruktionen
- 160': Programminstruktionen
- 162: Speicherbereich
- 162': Speicherbereich
- 163: Speicherbereich
- 164: Schnittstelle
- 166: Schnittstelle
- 168: Mobilfunkgerät
- 170: Schnittstelle
- 172: Mobilfunkschnittstelle
- 174: App-Server
- 176: App
- 178: Leseserver
- 180: Schreibserver
- 182: Speicherbereich
- 184: Terminalprogramm
- 186: Vorgang
- 188: Vorgang
- 190: Vorgang
- 192: Vorgang

## Patentansprüche

1. Verfahren zur Personalisierung eines Secure Element (158) mithilfe eines ID-Tokens (106) zur Verwendung des personalisierten Secure Elements durch ein Terminalprogramm, wobei der ID-Token einen elektronischen Speicher (118) mit einem geschützten Speicherbereich (124, 162) aufweist, in dem eine Personalisierungsinformation gespeichert ist, wobei ein Zugriff auf den geschützten Speicherbereich nur über einen Prozessor (128) des ID-Tokens möglich ist, wobei das Secure Element einen elektronischen Speicher (118') mit einem geschützten Speicherbereich (124', 162') aufweist, wobei ein Zugriff auf den geschützten Speicherbereich nur über einen Prozessor (128') des Secure Elements möglich ist, mit folgenden Schritten:
i) Speicherung der Personalisierungsinformation in dem Secure Element durch
a) Auslesen der Personalisierungsinformation aus dem ID-Token durch ein hierzu berechtigtes ID-Provider-Computersystem (136) über ein Netzwerk (116),
b) Erzeugung einer Nonce durch das ID-Provider-Computersystem für die Personalisierungsinformation,
c) Speicherung der Nonce in einer Datenbank (109) durch das ID-Provider-Computersystem , wobei die Personalisierungsinformation oder ein daraus abgeleiteter Wert als Zugriffsschlüssel auf die Nonce verwendet wird,
d) Schreiben der aus dem ID-Token ausgelesenen Personalisierungsinformation und/oder des daraus abgeleiteten Werts und der Nonce über das Netzwerk in das Secure Element durch das hierzu berechtigte ID-Provider-Computersystem,
ii) Verifizierung der in dem Secure Element gespeicherten Personalisierungsinformation durch:
a) nochmaliges Auslesen der Personalisierungsinformation aus dem ID-Token durch das hierzu berechtigte ID-Provider-Computersystem (136) über das Netzwerk (116),
b) Zugriff auf die Datenbank mit der aus dem ID-Token ausgelesenen Personalisierungsinformation oder einem daraus abgeleiteten Wert als Zugriffsschlüssel durch das ID-Provider-Computersystem, um die Nonce aus der Datenbank auszulesen,
c) Auslesen der Nonce aus dem Secure Element durch das hierzu berechtigte ID-Provider-Computersystem,
d) Prüfung durch das ID-Provider-Computersystem, ob die aus dem Secure Element ausgelesene Nonce mit der aus der Datenbank ausgelesenen Nonce übereinstimmt, und wenn dies der Fall ist:
iii) Freischaltung des personalisierten Secure Elements zur Verwendung durch ein Terminalprogramm durch
a) Erzeugung eines Freischaltsignals durch das ID-Provider-Computersystem,
b) Übertragung des Freischaltsignals von dem ID-Provider-Computersystem an das Secure Element über das Netzwerk,
c) Speicherung einer Information in dem geschützten Speicherbereich des Secure Elements zur Abfrage durch das Terminalprogramm, wobei die Information den freigeschalteten Zustand des Secure Elements für die Verwendung durch das Terminalprogramm angibt.

2. Verfahren nach Anspruch 1, wobei der ID-Token eine Kommunikations-Schnittstelle (108) zur Kommunikation mit einem Lesegerät nach einem ersten Datenübertragungsstandard aufweist, und wobei das Secure Element eine Kommunikations-Schnittstelle (164) zur Kommunikation mit dem Lesegerät nach einem zweiten Datenübertragungsstandard aufweist, wobei das Lesegerät die ersten und zweiten Datenübertragungsstandards unterstützt.

3. Verfahren nach Anspruch 1 oder 2, wobei in dem Schritt ii) c) auch die Personalisierungsinformation und/oder der daraus abgeleitete Wert aus dem Secure Element ausgelesen wird und in dem Schritt ii) d) die nochmals aus dem ID-Token ausgelesene Personalisierungsinformation und die aus dem Secure Element ausgelesene Personalisierungsinformation oder die daraus jeweils abgeleiteten Werte auf Übereinstimmung geprüft werden.

4. Verfahren nach Anspruch 1, 2 oder 3 wobei die Speicherung der Nonce in der Datenbank mit einem Zeitstempel erfolgt, wobei die Verifizierung der in dem Secure Element gespeicherten Personalisierungsinformation nur unter der zusätzlichen Voraussetzung erfolgt, dass zwischen einem durch den Zeitstempel angegebenen Zeitpunkt und dem Zeitpunkt der Prüfung auf Übereinstimmung nicht mehr als ein Zeitintervall einer vorgegebenen Länge vergangen ist.

5. Verfahren nach einem der vorhergehenden Ansprüche, wobei das personalisierte und freigeschaltete Secure Element als Trusted Device für die Erzeugung eines Device-Protected U-Prove-Token verwendet wird.

6. Verfahren nach Anspruch 5, wobei von einem Mobilfunkgerät, insbesondere einem Smartphone, ein Token-Request für die Erzeugung des U-Prove-Token an einen Issuer gesendet wird, eine gegenseitige Authentifizierung zwischen dem Issuer und dem Secure Element erfolgt und der Issuer die Personalisierungsinformation von dem ID-Provider-Computersystem empfängt, wobei der Issuer die in dem Secure Element gespeicherte Personalisierungsinformation anfordert und daraufhin die Personalisierungsinformation und einen öffentlichen Schlüssel des Secure Elements über einen verschlüsselten Kanal empfängt, und dann mithilfe der Personalisierungsinformation und dem öffentlichen Schlüssel des Secure Elements den Device Protected U-Prove-Token erzeugt.

7. Verfahren nach einem der vorhergehenden Ansprüche, wobei es sich bei dem abgeleiteten Wert um einen Hashwert handelt.

8. Verfahren nach einem der vorhergehenden Ansprüche, wobei für das Auslesen der Personalisierungsinformation aus dem ID-Token die folgenden Schritte durchgeführt werden:
- Authentifizierung eines Nutzers (102), dem der ID-Token zugeordnet ist, gegenüber dem ID-Token,
- Authentifizierung des ID-Provider-Computersystems gegenüber dem ID-Token über das Netzwerk, wobei die Authentifizierung des ID-Provider-Computersystems gegenüber dem ID-Token mithilfe eines Zertifikats (144, 144') des ID-Provider-Computersystems erfolgt, in dem eine Leseberechtigung für einen Lesezugriff des ID-Provider-Computersystems auf die in dem geschützten Speicherbereich des ID-Tokens gespeicherte Personalisierungsinformation gespeichert ist, wobei der ID-Token die Leseberechtigung des ID-Provider-Computersystems für den Lesezugriff auf die Personalisierungsinformation mithilfe des Zertifikats überprüft,
- nach erfolgreicher Authentifizierung des Nutzers und des ID-Provider-Computersystems gegenüber dem ID-Token und nach erfolgreicher Überprüfung der Leseberechtigung, Durchführung des Lesezugriffs des ID-Provider-Computersystems auf die in dem ID-Token gespeicherte Personalisierungsinformation über das Netzwerk, wobei die Übertragung der Personalisierungsinformation von dem ID-Token zu dem ID-Provider-Computersystem über das Netzwerk mit Ende-zu-Ende-Verschlüsselung erfolgt, wobei die ID-Token-seitige Verschlüsselung (132) durch den Prozessor des ID-Tokens durchgeführt wird, wobei der ID-Token über das Lesegerät, welches die ersten und zweiten Datenübertragungsstandards implementiert, an das Netzwerk angebunden ist.

9. Verfahren nach einem der vorhergehenden Ansprüche, wobei für das Schreiben der Personalisierungsinformation die folgenden Schritte durchgeführt werden:
- Authentifizierung des Nutzers gegenüber dem Nutzer zugeordneten Secure Element,
- Authentifizierung des ID-Provider-Computersystems gegenüber dem Secure Element über das Netzwerk, wobei die Authentifizierung des ID-Provider-Computersystems gegenüber dem Secure Element mithilfe eines Zertifikats (144, 144') des ID-Provider-Computersystems erfolgt, in dem eine Schreibberechtigung für einen Schreibzugriff des ID-Provider-Computersystems auf den geschützten Speicherbereich des Secure Element zur Speicherung der Personalisierungsinformation gespeichert ist, wobei das Secure Element die Schreibberechtigung des ID-Provider-Computersystems für den Schreibzugriff mithilfe des Zertifikats überprüft,
- nach erfolgreicher Authentifizierung des Nutzers und des ID-Provider-Computersystems gegenüber dem ID-Token und nach erfolgreicher Überprüfung der Schreibberechtigung durch das Secure Element, Durchführung des Schreibzugriffs des ID-Provider-Computersystems zum Schreiben der Personalisierungsinformation in den geschützten Speicherbereich des Secure Element über das Netzwerk, wobei die Personalisierungsinformation von dem ID-Provider-Computersystem über das Netzwerk mit Ende-zu-Ende-Verschlüsselung an das Secure Element übertragen wird, wobei die Secure Element-seitige Verschlüsselung (132') durch den Prozessor des Secure Element durchgeführt wird, wobei das Secure Element über das Lesegerät an das Netzwerk angebunden ist.

10. Verfahren nach einem der vorhergehenden Ansprüche, wobei für das Auslesen der Personalisierungsinformation oder des daraus abgeleiteten Werts und der Nonce aus dem Secure Elemente die folgenden Schritte durchgeführt werden:
- Authentifizierung des Nutzers gegenüber dem Nutzer zugeordneten Secure Element,
- Authentifizierung des ID-Provider-Computersystems gegenüber dem Secure Element über das Netzwerk, wobei die Authentifizierung des ID-Provider-Computersystems gegenüber dem Secure Element mithilfe eines Zertifikats (144, 144') des ID-Provider-Computersystems erfolgt, in dem eine Leseberechtigung für einen Lesezugriff des ID-Provider-Computersystems auf den geschützten Speicherbereich des Secure Element zum Auslesen der Personalisierungsinformation oder des daraus abgeleiteten Wertes und der Nonce gespeichert ist, wobei das Secure Element die Leseberechtigung des ID-Provider-Computersystems für den Lesezugriff mithilfe des Zertifikats überprüft,
- nach erfolgreicher Authentifizierung des Nutzers und des ID-Provider-Computersystems gegenüber dem Secure Element und nach erfolgreicher Überprüfung der Leseberechtigung durch das Secure Element, Durchführung des Lesezugriffs des ID-Provider-Computersystems zum Lesen der Personalisierungsinformation oder des daraus abgeleiteten Werts und der Nonce aus dem geschützten Speicherbereich des Secure Element über das Netzwerk, wobei die Personalisierungsinformation oder der daraus abgeleitete Wert und die Nonce von dem Secure Element über das Netzwerk mit Ende-zu-Ende-Verschlüsselung an das ID-Provider-Computersystem übertragen wird, wobei die Secure Element-seitige Verschlüsselung (132') durch den Prozessor des Secure Element durchgeführt wird, wobei das Secure Element über das Lesegerät an das Netzwerk angebunden ist.

11. Verfahren nach Anspruch 8, 9 oder 10, wobei das ID-Provider-Computersystem einen ersten Server (101) zum Auslesen der Personalisierungsinformation aus dem ID-Token beinhaltet, und wobei dem ersten Server ein erstes Zertifikat (144) zugeordnet ist, welches die Leseberechtigung des ersten Servers zum Lesen der Personalisierungsinformation aus dem ID-Token spezifiziert, und wobei das ID-Provider-Computersystem einen zweiten Server (103) beinhaltet, der zum Schreiben der Personalisierungsinformation und der Nonce in das Secure Element und zum Auslesen der Personalisierungsinformation oder des daraus abgeleiteten Werts und der Nonce aus dem Secure Element dient, wobei dem zweiten Server ein zweites Zertifikat (144') zugeordnet ist, welches die Schreibberechtigung des zweiten Servers zum Schreiben der Personalisierungsinformation und der Nonce in das Secure Element und die Leseberechtigung des zweiten Servers zum Auslesen der Personalisierungsinformation oder des daraus abgeleiteten Werts und der Nonce aus dem Secure Element spezifiziert, wobei die Erzeugung des Freischaltsignals durch den zweiten Server erfolgt.

12. Verfahren nach einem der Ansprüche 2-11, wobei das Lesegerät eine Nutzerschnittstelle aufweist, und das Lesegerät zur Ausgabe eines Abfragesignals über die Nutzerschnittstelle sowie zur Eingabe eines Bestätigungssignals auf das Abfragesignal hin durch den Nutzer ausgebildet ist, wobei das Abfragesignal zur Authentifizierung des Nutzers und des ID-Provider-Computersystems sowie der erfolgreichen Prüfung der Schreibberechtigung von dem Lesegerät generiert und über die Nutzerschnittstelle ausgegeben wird, wobei die Eingabe des Bestätigungssignals eine Voraussetzung für die anschließende Durchführung des Schreibzugriffs durch das ID-Provider-Computersystem ist, wobei die Eingabe des Bestätigungssignals vorzugsweise durch Eingabe einer PIN des Nutzers erfolgt, wodurch der Nutzer authentifiziert wird.

13. Verfahren nach einem der vorhergehenden Ansprüche, wobei es sich bei der Personalisierungsinformation um ein ID-Token-Pseudonym, insbesondere einen Restricted Identifier (rID) handelt.

14. Verfahren nach einem der vorhergehenden Ansprüche, wobei die Personalisierungsinformation ein oder mehrere Attribute des Nutzers und/oder des ID-Tokens beinhaltet.

15. Verfahren nach einem der Ansprüche 2-14, wobei das Lesegerät ein erstes Signal erzeugt, um dem Nutzer das erstmalige Auslesen der Personalisierungsinformation gemäß Schritt i)a) zu signalisieren und wobei das Lesegerät ein zweites Signal erzeugt, um dem Nutzer das nochmalige Auslesen der Personalisierungsinformation gemäß Schritt ii)a) zu signalisieren.

16. Verfahren nach einem der vorhergehenden Ansprüche, wobei es sich bei dem ID-Token um ein Wert- oder Sicherheitsdokument handelt, insbesondere ein Ausweisdokument, das heißt ein ID-Dokument, insbesondere ein elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

17. Verfahren nach einem der vorhergehenden Ansprüche, wobei es sich bei dem Secure Element um eine Chipkarte, insbesondere eine Micro-SD-Karte, insbesondere eine Micro-SD-Karte mit integrierter NFC-Antenne handelt.

18. Verfahren nach einem der vorhergehenden Ansprüche, wobei das Secure Element vor der Personalisierung von einem Erstbenutzungsstatus in einen Benutzt-Status überführt wird, um die Authentifizierung des Nutzers gegenüber dem Secure Element zu ermöglichen.

19. Verfahren nach einem der vorhergehenden Ansprüche 9 bis 18, wobei die Ende-zu-Ende-Verschlüsselung (132') durch Ausführung eines Anwendungsprogramms (176) durch den Prozessor des Secure Elements durchgeführt wird, wobei das Anwendungsprogramm vor der Durchführung der Personalisierung mithilfe eines Mobilfunkgeräts (168) über das Netzwerk von einem Applicationserver (174) geladen wird, wobei das Mobilfunkgerät eine Kommunikations-Schnittstelle (170) zur Kommunikation über eine Kommunikationsschnittstelle (166) des Secure Element aufweist.

20. Computersystem mit einem ID-Provider-Computersystem (136), einem Lesegerät mit Kommunikations-Schnittstellen (104, 105) zur Kommunikation nach einem ersten bzw. einem zweiten Datenübertragungsstandard, wobei das Lesegerät an ein Netzwerk (116) angebunden ist, mit einem ID-Token (106), wobei der ID-Token einen elektronischen Speicher (118) mit einem geschützten Speicherbereich (124, 162) aufweist, in dem eine Personalisierungsinformation gespeichert ist, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit dem Lesegerät nach dem ersten Datenübertragungsstandard aufweist, wobei das Secure Element einen elektronischen Speicher (118') mit einem geschützten Speicherbereich (124', 162') aufweist, wobei ein Zugriff auf den geschützten Speicherbereich nur über einen Prozessor (128') des Secure Elements möglich ist, und wobei das Secure Element eine Kommunikations-Schnittstelle (164) zur Kommunikation mit dem Lesegerät nach dem zweiten Datenübertragungsstandard aufweist,
wobei das Computersystem zur Personalisierung des Secure Element (158) mithilfe des ID-Tokens (106) zur Verwendung des personalisierten Secure Elements durch ein Terminalprogramm ausgebildet ist, wobei das Computersystem hierfür zur Durchführung der folgenden Schritte ausgebildet ist:
i) Speicherung der Personalisierungsinformation in dem Secure Element durch
a) Auslesen der Personalisierungsinformation aus dem ID-Token durch ein hierzu berechtigtes ID-Provider-Computersystem (136) über ein Netzwerk (116),
b) Erzeugung einer Nonce durch das ID-Provider-Computersystem für die Personalisierungsinformation,
c) Speicherung der Nonce in einer Datenbank durch das ID-Provider-Computersystem , wobei die Personalisierungsinformation oder ein daraus abgeleiteter Wert als Zugriffsschlüssel auf die Nonce verwendet wird,
d) Schreiben der aus dem ID-Token ausgelesenen Personalisierungsinformation und/oder des daraus abgeleiteten Werts und der Nonce über das Netzwerk in das Secure Element durch das hierzu berechtigte ID-Provider-Computersystem,
ii) Verifizierung der in dem Secure Element gespeicherten Personalisierungsinformation durch:
a) nochmaliges Auslesen der Personalisierungsinformation aus dem ID-Token durch das hierzu berechtigte ID-Provider-Computersystem (136) über das Netzwerk (116),
b) Zugriff auf die Datenbank mit der aus dem ID-Token ausgelesenen Personalisierungsinformation oder einem daraus abgeleiteten Wert als Zugriffsschlüssel durch das ID-Provider-Computersystem, um die Nonce aus der Datenbank auszuleisen,
c) Auslesen der Nonce aus dem Secure Element durch das hierzu berechtigte ID-Provider-Computersystem,
d) Prüfung durch das ID-Provider-Computersystem, ob die aus dem Secure Element ausgelesene Nonce mit der aus der Datenbank ausgelesenen Nonce übereinstimmt, und wenn dies der Fall ist:
iii) Freischaltung des personalisierten Secure Elements zur Verwendung durch das Terminalprogramm durch
a) Erzeugung eines Freischaltsignals durch das ID-Provider-Computersystem,
b) Übertragung des Freischaltsignals von dem ID-Provider-Computersystem an das Secure Element,
c) Speicherung einer Information in dem geschützten Speicherbereich des Secure Elements zur Abfrage durch das Terminalprogramm, wobei die Information den freigeschalteten Zustand des Secure Elements für die Verwendung durch das Terminalprogramm angibt.

21. Computersystem nach Anspruch 20, mit einem Mobilfunkgerät (168), insbesondere einem Smartphone, mit einem integrierten kontaktbehafteten Lesegerät (170) für das Secure Element, wobei das Mobilfunkgerät zum Laden eines Anwendungsprogramms (176) ausgebildet ist, wobei die Ende-zu-Ende-Verschlüsselung (132') durch Ausführung des Anwendungsprogramms (176) durch den Prozessor des Secure Elements durchgeführt wird.

## Claims

1. A method for personalizing a secure element (158) by means of an ID token (106) for the use of the personalized secure element by a terminal program, wherein the ID token comprises an electronic memory (118) having a protected memory area (124, 162), in which personalization information is stored, wherein the protected memory area can be accessed only via a processor (128) of the ID token, wherein the secure element has an electronic memory (118') having a protected memory area (124', 162'), wherein the protected memory area can be accessed only via a processor (128') of the secure element, having the following steps:
i) storing the personalization information in the secure element by
a) reading the personalization information out of the ID token by means of an authorized ID provider computer system (136) via a network (116),
b) generating a nonce by means of the ID provider computer system for the personalization information,
c) storing the nonce in a database (109) by means of the ID provider computer system, wherein the personalization information or a value derived therefrom is used as the access key to the nonce,
d) writing the personalization information read out of the ID token and/or the value derived therefrom and the nonce into the secure element via the network by means of the authorized ID provider computer system,
ii) verifying the personalization information stored in the secure element by:
a) reading the personalization information out of the ID token again by means of the authorized ID provider computer system (136) via the network (116),
b) accessing the database with the personalization information read out of the ID token or a value derived therefrom as the access key by means of the ID provider computer system, in order to read the nonce out of the database,
c) reading the nonce out of the secure element by means of the authorized ID provider computer system,
d) checking, by means of the ID provider computer system, whether the nonce read out of the secure element matches the nonce read out of the database and, if this is the case:
iii) releasing the personalized secure element for use by a terminal program by
a) generating a release signal by means of the ID provider computer system,
b) transmitting the release signal from the ID provider computer system to the secure element via the network,
c) storing a piece of information in the protected memory area of the secure element for query by the terminal program, wherein the information indicates the released state of the secure element for use by the terminal program.

2. The method according to claim 1, wherein the ID token comprises a communication interface (108) for communication with a reading device according to a first data transmission standard, and wherein the secure element has a communication interface (164) for communication with the reading device according to a second data transmission standard, wherein the reading device supports the first and the second data transmission standard.

3. The method according to claim 1 or 2, wherein, in step ii) c), the personalization information and/or the value derived therefrom are/is read out of the secure element and, in step ii) d), the personalization information that is read out of the ID token again and the personalization information read out of the secure element or the respective values derived therefrom are checked for conformance.

4. The method according to claim 1, 2 or 3, wherein the nonce is stored in the database with a time stamp, wherein the personalization information stored in the secure element is verified only under the additional precondition that no more than one time interval having a predefined length has passed between a time indicated by the time stamp and the time of the check for conformance

5. The method according to any one of the preceding claims, wherein the personalized and released secure element is used as a trusted device for generating a device protected U-Prove token.

6. The method according to claim 5, wherein, by means of a mobile radio device, in particular a smartphone, a token request for generating the U-Prove token is sent to an issuer, a mutual authentication takes place between the issuer and the secure element, and the issuer receives the personalization information from the ID provider computer system, wherein the issuer requests the personalization information stored in the secure element and, as a result, receives the personalization information and a public key of the secure element via an encrypted channel and generates the device protected U-Prove token by means of the personalization information and the public key of the secure element.

7. The method according to any one of the preceding claims, wherein the derived value is a hash value.

8. The method according to any one of the preceding claims, wherein, in order to read out the personalization information from the ID token, the following steps are carried out:
- authenticating a user (102), to which the ID token is assigned, with respect to the ID token,
- authenticating the ID provider computer system with respect to the ID token via the network, wherein the ID provider computer system is authenticated with respect to the ID token by means of a certificate (144, 144') of the ID provider computer system, in which a read authorization for a read access of the ID provider computer system is stored on the personalization information stored in the protected memory area of the ID token, wherein the ID token checks the read authorization of the ID provider computer system for the read access to the personalization information by means of the certificate,
- after successful authentication of the user and the ID provider computer system with respect to the ID token and after the read access has been successfully checked, the read access of the ID provider computer system to the personalization information stored in the ID token is carried out via the network, wherein the personalization information is transmitted from the ID token to the ID provider computer system via the network with end-to-end encryption, wherein the ID token-side encryption (132) is carried out by the processor of the ID token, wherein the ID token is connected to the network via the reading device, which implements the first and the second data transmission standard.

9. The method according to any one of the preceding claims, wherein, in order to write the personalization information, the following steps are carried out:
- authenticating the user with respect to the secure element assigned to the user,
- authenticating the ID provider computer system with respect to the secure element via the network, wherein the ID provider computer system is authenticated with respect to the secure element by means of a certificate (144, 144') of the ID provider computer system, in which a write authorization for a write access of the ID provider computer system is stored in the protected memory area of the secure element for storing the personalization information, wherein the secure element checks the write authorization of the ID provider computer system for the write access by means of the certificate,
- after successful authentication of the user and the ID provider computer system with respect to the ID token and after the write access has been successfully checked by the secure element, the write access is carried out by the ID provider computer system for writing the personalization information in the protected memory area of the secure element via the network, wherein the personalization information is transmitted from the ID provider computer system, via the network with end-to-end encryption, to the secure element, wherein the secure element-side encryption (132') is carried out by the processor of the secure element, wherein the secure element is connected to the network via the reading device.

10. The method according to any one of the preceding claims, wherein, in order to read out the personalization information, or the value derived therefrom, and the nonce from the secure element, the following steps are carried out:
- authenticating the user with respect to the secure element assigned to the user,
- authenticating the ID provider computer system with respect to the secure element via the network, wherein the ID provider computer system is authenticated with respect to the secure element by means of a certificate (144, 144') of the ID provider computer system, in which a read authorization for a read access of the ID provider computer system is stored in the protected memory area of the secure element for reading out the personalization information, or the value derived therefrom, and the nonce, wherein the secure element checks the read authorization of the ID provider computer system for the read access by means of the certificate,
- after successful authentication of the user and the ID provider computer system with respect to the secure element and after the read access has been successfully checked by means of the secure element, the read access of the ID provider computer system to read the personalization information, or the value derived therefrom, and the nonce from the protected area of the secure element is carried out via the network, wherein the personalization information, or the value derived therefrom, and the nonce are transmitted from the secure element, via the network with end-to-end encryption, to the ID provider computer system, wherein the secure element-side encryption (132') is carried out by the processor of the secure element, wherein the secure element is connected to the network via the reading device.

11. The method according to claim 8, 9 or 10, wherein the ID provider computer system includes a first server (101) for reading out the personalization information from the ID token, and wherein assigned to the first server is a first certificate (144), which specifies the read authorization of the first server to read the personalization information out of the ID token, and wherein the ID provider computer system includes a second server (103), which is used to write the personalization information and the nonce to the secure element and to read out the personalization information, or the value derived therefrom, and the nonce from the secure element, wherein assigned to the second server is a second certificate (144'), which specifies the write authorization of the second server to write the personalization information and the nonce to the secure element and the read authorization of the second server to read out the personalization information, or the value derived therefrom, and the nonce, from the secure element, wherein the release signal is generated by the second server.

12. The method according to any one of claims 2 to 11, wherein the reading device comprises a user interface, and the reading device is designed to output a query signal via the user interface and for the input of a confirmation signal in response to the query signal by the user, wherein the query signal for authenticating the user and the ID provider computer system and the successful check of the write authorization is generated by the reading device and is output via the user interface, wherein the input of the confirmation signal is a precondition for the subsequent carrying out of the write access by the ID provider computer system, wherein the input of the confirmation signal is preferably carried out by inputting a PIN of the user, whereby the user is authenticated.

13. The method according to any one of the preceding claims, wherein the personalization information is an ID token pseudonym, in particular a restricted identifier (rID).

14. The method according to any one of the preceding claims, wherein the personalization information includes one or more attributes of the user and/or the ID token.

15. The method according to any one of the claims 2 to 14, wherein the reading device generates a first signal in order to signal to the user that the personalization information has been read out for the first time as per step i)a), and wherein the reading device generates a second signal in order to signal to the user that the personalization information has been read out again as per step ii)a).

16. The method according to any one of the preceding claims, wherein the ID token is a value or a security document, in particular an identification document, i.e., an ID document, in particular an electronic personal identification document, a passport, a driver's license, an employee identification card, or a payment means, such as, for example, a banknote, a credit card, or any other type of authorization, such as, for example, an admission card, a consignment note, or a visa, in particular a chip card, in particular having an RFID and/or NFC interface.

17. The method according to any one of the preceding claims, wherein the secure element is a chip card, in particular a micro SD card, in particular a micro SD card having an integrated NFC antenna.

18. The method according to any one of the preceding claims, wherein, before personalization, the secure element is transferred from a first-use status into a used status in order to permit the authentication of the user with respect to the secure element.

19. The method according to any one of the preceding claims 9 to 18, wherein the end-to-end encryption (132') is carried out by the processor of the secure element executing an application program (176), wherein, before the personalization is carried out, the application program is loaded from the application server (174) by means of the mobile radio device (168) via the network, wherein the mobile radio device has a communication interface (170) for communication via a communication interface (166) of the secure element.

20. A computer system comprising an ID provider computer system (136), a reading device having communication interfaces (104, 105) for communication according to a first or a second data transmission standard, wherein the reading device is connected to a network (116), comprising an ID token (106), wherein the ID token has an electronic memory (118) having a protected memory area (124, 162) in which personalization information is stored, wherein access to the protected memory area is possible only via a processor (128) of the ID token, and wherein the ID token has a communication interface (108) for communication with the reading device according to the first data transmission standard, wherein the secure element has an electronic memory (118') having a protected memory area (124', 162'), wherein access to the protected memory area is possible only via a processor (128') of the secure element, and wherein the secure element has a communication interface (164) for communication with the reading device according to the second data transmission standard,
wherein the computer system is designed to personalize the secure element (158) by means of the ID token (106) for the use of the personalized secure element by a terminal program, wherein the computer system therefor is designed to carry out the following steps:
i) storing the personalization information in the secure element by
a) reading the personalization information out of the ID token by means of an authorized ID provider computer system (136) via a network (116),
b) generating a nonce by means of the ID provider computer system for the personalization information,
c) storing the nonce in a database by means of the ID provider computer system, wherein the personalization information or a value derived therefrom is used as the access key to the nonce,
d) writing the personalization information read out of the ID token and/or the value derived therefrom and the nonce into the secure element via the network by means of the authorized ID provider computer system,
ii) verifying the personalization information stored in the secure element by:
a) reading the personalization information out of the ID token again by means of the authorized ID provider computer system (136) via the network (116),
b) accessing the database with the personalization information read out of the ID token or a value derived therefrom as the access key by means of the ID provider computer system, in order to read the nonce out of the database,
c) reading the nonce out of the secure element by means of the authorized ID provider computer system,
d) checking, by means of the ID provider computer system, whether the nonce read out of the secure element matches the nonce read out of the database and, if this is the case:
iii) releasing the personalized secure element for use by the terminal program by
a) generating a release signal by means of the ID provider computer system,
b) transmitting the release signal from the ID provider computer system to the secure element,
c) storing a piece of information in the protected memory area of the secure element for query by the terminal program, wherein the information indicates the released state of the secure element for use by the terminal program.

21. The computer system according to claim 20, comprising a mobile radio device (168), in particular a smartphone, comprising an integrated contact-based reading device (170) for the secure element, wherein the mobile radio device is designed to load an application program (176), wherein the end-to-end encryption is carried out by the processor of the secure element executing the application program (176).

## Revendications

1. Procédé de personnalisation d'un élément sécurisé (158) à l'aide d'un jeton d'identification (106), pour une utilisation de l'élément sécurisé personnalisé par un programme de terminal, dans lequel le jeton d'identification présente une mémoire électronique (118) avec un secteur de mémoire protégé (124, 162), à l'intérieur duquel une information de personnalisation est enregistrée, dans lequel un accès au secteur de mémoire protégé n'est possible que par l'intermédiaire d'un processeur (128) du jeton d'identification, dans lequel l'élément sécurisé présente une mémoire électronique (118') avec un secteur de mémoire protégé (124', 162'), dans lequel un accès au secteur de mémoire protégé n'est possible que par un processeur (128') de l'élément sécurisé, avec les étapes suivantes :
i) enregistrement de l'information de personnalisation dans l'élément sécurisé par
a) la lecture de l'information de personnalisation provenant du jeton d'identification par un système informatique de fournisseur d'identification (136) habilité pour cela par l'intermédiaire d'un réseau (116),
b) la génération d'un nonce pour l'information de personnalisation par le système informatique de fournisseur d'identification,
c) l'enregistrement du nonce dans une banque de données (109) par le système informatique de fournisseur d'identification, dans lequel l'information de personnalisation, ou une valeur qui en est dérivée, est employée en tant que clé d'accès en réponse au nonce,
d) l'écriture de l'information de personnalisation lue à partir du jeton d'identification, et/ou de la valeur en étant dérivée, et du nonce dans l'élément sécurisé par le système informatique de fournisseur d'identité habilité à ceci par l'intermédiaire du réseau,
ii) vérification de l'information de personnalisation enregistrée dans l'élément sécurisé par :
a) une relecture de l'information de personnalisation provenant du jeton d'identification par le système informatique de fournisseur d'identité (136) habilité pour cela par l'intermédiaire du réseau (116),
b) un accès à la banque de données avec l'information de personnalisation lue dans le jeton d'identification, ou d'une valeur en étant dérivée, en tant que clé d'accès par le système informatique de fournisseur d'identification afin de lire le nonce à partir de la banque de données,
c) la lecture du nonce à partir de l'élément sécurisé par le système informatique de fournisseur d'identification habilité pour cela,
d) le contrôle par le système informatique de fournisseur d'identification si le nonce lu à partir de l'élément sécurisé correspond au nonce lu à partir de la banque de données, et si c'est le cas :
iii) libération de l'élément sécurisé personnalisé pour une utilisation par un programme de terminal par
a) la génération d'un signal de validation par le système informatique de fournisseur d'identification,
b) la transmission du signal de validation du système informatique de fournisseur d'identification vers l'élément sécurisé par l'intermédiaire du réseau,
c) l'enregistrement d'une information dans un secteur de mémoire protégé de l'élément sécurisé pour une interrogation par le programme terminal, où l'information indique l'état validé de l'élément sécurisé pour une utilisation par le programme de terminal.

2. Procédé selon la revendication 1, dans lequel le jeton d'identification présente une interface de communication (108) pour la communication avec un appareil de lecture d'après un premier standard de transmission de données, et dans lequel l'élément sécurisé présente une interface de communication (164) pour la communication avec l'appareil de lecture d'après un deuxième standard de transmission de données, dans lequel l'appareil de lecture apporte son soutien au premier et au deuxième standards de transmission de données.

3. Procédé selon les revendications 1 ou 2, dans lequel dans l'étape ii) c), l'information de personnalisation, et/ou la valeur qui en est dérivée, est également lue à partir de l'élément sécurisé, et dans l'étape ii) d), l'information de personnalisation relue à partir du jeton d'identification et l'information de personnalisation lue à partir de l'élément sécurisé, ou les valeurs qui en sont respectivement dérivées, sont contrôlées en ce qui concerne leur concordance.

4. Procédé selon les revendications 1, 2 ou 3, dans lequel l'enregistrement du nonce dans la banque de données est effectué avec un horodatage, dans lequel la vérification de l'information de personnalisation enregistrée dans l'élément sécurisé n'est effectuée qu'à la condition complémentaire qu'un intervalle de temps inférieur à un intervalle de temps d'une longueur donnée s'est écoulé entre le temps indiqué par l'horodatage et le temps du contrôle de la concordance.

5. Procédé selon l'une des revendications précédentes, dans lequel l'élément sécurisé personnalisé et valide est utilisé en tant que dispositif de confiance pour la génération d'un jeton U prove protégé par un dispositif.

6. Procédé selon la revendication 5, dans lequel un jeton de demande est envoyé à un émetteur pour la génération d'un jeton U prove à partir d'un appareil de téléphonie mobile, notamment d'un Smartphone, une authentification réciproque entre l'émetteur et l'élément sécurisé est effectuée et l'émetteur réceptionne l'information de personnalisation du système informatique de fournisseur d'identification, dans lequel l'émetteur demande l'information de personnalisation enregistrée dans l'élément sécurisé et ensuite reçoit l'information de personnalisation et une clé publique de l'élément sécurisé par l'intermédiaire d'un canal crypté, et génère ensuite le jeton U prove protégé par un dispositif à l'aide de l'information de personnalisation et de la clé publique de l'élément sécurisé.

7. Procédé selon l'une des revendications précédentes, dans lequel il s'agit d'un hachage pour la valeur dérivée.

8. Procédé selon l'une des revendications précédentes, dans lequel, pour la lecture de l'information de personnalisation à partir du jeton d'identification les étapes suivantes sont réalisées :
-- authentification d'un utilisateur (102), auquel est attribué le jeton d'identification, par rapport au jeton d'identification,
-- authentification du système informatique de fournisseur d'identification par rapport au jeton d'identification par l'intermédiaire du réseau, dans lequel l'authentification du système informatique de fournisseur d'identification par rapport au jeton d'identification est effectuée à l'aide d'un certificat (144, 144') du système informatique de fournisseur d'identification, en ce qu'une validation de lecture pour un accès en lecture du système informatique de fournisseur d'identification est enregistrée dans l'information de personnalisation enregistrée dans le secteur de mémoire protégé du jeton d'identification, dans lequel le jeton d'identification contrôle la validation de lecture du système informatique de fournisseur d'identification pour l'accès en lecture vis-à-vis de l'information de personnalisation à l'aide du certificat,
-- après avoir réalisé avec succès l'authentification de l'utilisateur et du système informatique de fournisseur d'identification par rapport au jeton d'identification et après avoir réalisé avec succès le contrôle de la validation de lecture, exécution de l'accès en lecture du système informatique de fournisseur d'identification en réponse à l'information de personnalisation enregistrée dans le jeton d'identification par l'intermédiaire du réseau, dans lequel la transmission de l'information de personnalisation du jeton d'identification vers le système informatique de fournisseur d'identification est effectuée avec u cryptage de bout en bout par l'intermédiaire du réseau, dans lequel le cryptage du côté du jeton d'identification (132) est réalisé par le processeur du jeton d'identification, dans lequel le jeton d'identification est relié au réseau par l'intermédiaire de l'appareil de lecture, lequel met en oeuvre les premier et deuxième standards de transmission de données.

9. Procédé selon l'une des revendications précédentes, dans lequel, pour l'écriture de l'information de personnalisation, les étapes suivantes sont réalisées :
-- authentification d'un utilisateur par rapport à l'élément sécurisé attribué à l'utilisateur,
-- authentification du système informatique de fournisseur d'identification par rapport à l'élément sécurisé par l'intermédiaire du réseau, dans lequel l'authentification du système informatique de fournisseur d'identification par rapport à l'élément sécurisé est effectuée à l'aide d'un certificat (144, 144') du système informatique de fournisseur d'identification, en ce qu'une validation d'écriture pour un accès en écriture du système informatique de fournisseur d'identification est enregistrée dans l'information de personnalisation enregistrée dans le secteur de mémoire protégé de l'élément sécurisé, dans lequel l'élément sécurisé contrôle la validation d'écriture du système informatique de fournisseur d'identification pour l'accès à l'aide du certificat,
-- après avoir réalisé avec succès l'authentification de l'utilisateur et du système informatique de fournisseur d'identification par rapport au jeton d'identification et après avoir réalisé avec succès le contrôle de la validation d'écriture par l'élément sécurisé, exécution de l'accès en écriture du système informatique de fournisseur d'identification pour l'écriture de l'information de personnalisation dans le secteur de mémoire protégé de l'élément sécurisé par l'intermédiaire du réseau, dans lequel l'information de personnalisation du système informatique de fournisseur d'identification est transmise avec un cryptage de bout en bout vers l'élément sécurisé par l'intermédiaire du réseau, dans lequel le cryptage du côté de l'élément sécurisé (132') est réalisé par le processeur de l'élément sécurisé, dans lequel l'élément sécurisé est relié au réseau par l'intermédiaire de l'appareil de lecture.

10. Procédé selon l'une des revendications précédentes, dans lequel, pour la lecture de l'information de personnalisation, ou des valeurs en étant dérivées, et du nonce à partir de l'élément sécurisé, les étapes suivantes sont effectuées :
-- authentification d'un utilisateur par rapport à l'élément sécurisé attribué à l'utilisateur,
-- authentification du système informatique de fournisseur d'identification par rapport à l'élément sécurisé par l'intermédiaire du réseau, dans lequel l'authentification du système informatique de fournisseur d'identification par rapport à l'élément sécurisé est effectuée à l'aide d'un certificat (144, 144') du système informatique de fournisseur d'identification, en ce qu'une validation de lecture pour un accès en lecture du système informatique de fournisseur d'identification est enregistrée dans le secteur de mémoire protégé de l'élément sécurisé et du nonce, dans lequel l'élément sécurisé contrôle la validation de lecture du système informatique de fournisseur d'identification pour l'accès en lecture à l'aide du certificat,
-- après avoir réalisé avec succès l'authentification de l'utilisateur et du système informatique de fournisseur d'identification par rapport à l'élément sécurisé et après avoir réalisé avec succès le contrôle de la validation de lecture par l'élément sécurisé, exécution de l'accès en lecture du système informatique de fournisseur d'identification pour la lecture de l'information de personnalisation , ou de la valeur en étant dérivée, et du nonce à partir du secteur de mémoire protégé de l'élément sécurisé par l'intermédiaire du réseau, dans lequel l'information de personnalisation, ou la valeur en étant dérivée, et le nonce sont transmis avec un cryptage de bout en bout vers le système informatique de fournisseur d'identification par l'intermédiaire du réseau, dans lequel le cryptage du côté de l'élément sécurisé (132') est réalisé par le processeur de l'élément sécurisé, dans lequel l'élément sécurisé est relié au réseau par l'intermédiaire de l'appareil de lecture.

11. Procédé selon les revendications 8, 9 ou 10, dans lequel le système informatique de fournisseur d'identification contient un premier serveur (101), pour la lecture de l'information de personnalisation à partir du jeton d'identification, et dans lequel un premier certificat (144) est attribué au premier serveur, lequel spécifie la validation de lecture du premier serveur pour la lecture de l'information de personnalisation à partir du jeton d'identification, et dans lequel le système informatique de fournisseur d'identification contient un deuxième serveur (103), qui sert à l'écriture de l'information de personnalisation et du nonce dans l'élément sécurisé et pour la lecture de l'information de personnalisation, ou des valeurs en étant dérivées, et du nonce à partir de l'élément sécurisé, dans lequel un deuxième certificat (144') est attribué au deuxième serveur, lequel spécifie la validation d'écriture du deuxième serveur pour l'écriture de l'information de personnalisation et du nonce dans l'élément sécurisé et la validation de lecture du deuxième serveur pour la lecture de l'information de personnalisation ou de la valeur en étant dérivée et du nonce à partir de l'élément sécurisé, dans lequel la génération du signal de validation est effectuée par le deuxième serveur.

12. Procédé selon l'une des revendications 2 à 11, dans lequel l'appareil de lecture présente une interface utilisateur, et l'appareil de lecture est conçu pour l'émission d'un signal d'interrogation par l'utilisateur par l'intermédiaire de l'interface utilisateur, ainsi que pour l'introduction d'un signal de confirmation suite au signal d'interrogation, dans lequel le signal d'interrogation est émis généré par l'appareil de lecture pour l'authentification de l'utilisateur et du système informatique de fournisseur d'identification, ainsi que du contrôle couronné de succès de la validation d'écriture et est délivré par l'intermédiaire de l'interface utilisateur, dans lequel l'introduction du signal de confirmation est une condition préalable pour l'exécution ultérieure de l'accès en écriture par le système informatique de fournisseur d'identification, dans lequel l'introduction du signal de confirmation est effectué de préférence par l'introduction d'un code PIN de l'utilisateur, par lequel l'utilisateur est authentifié.

13. Procédé selon l'une des revendications précédentes, dans lequel il s'agit d'un pseudonyme de jeton d'identification, notamment d'un identifiant restreint (riD), dans le cas de l'information de personnalisation.

14. Procédé selon l'une des revendications précédentes, dans lequel l'information de personnalisation contient un ou de plusieurs attributs de l'utilisateur et/ou du jeton d'identification.

15. Procédé selon l'une des revendications 2 à 14, dans lequel l'appareil de lecture génère un premier signal afin de signaler à l'utilisateur une première lecture de l'information de personnalisation selon l'étape i) a) et dans lequel l'appareil de lecture génère un deuxième signal afin de signaler à l'utilisateur la relecture de l'information de personnalisation selon l'étape ii) a).

16. Procédé selon l'une des revendications précédentes, dans lequel il s'agit d'un document de valeur ou de sécurité, notamment un document d'identité, c'est-à-dire un document ID, notamment un passeport électronique, un passeport, un permis de conduire, une carte d'identité d'entreprise ou un moyen de paiement, comme, par exemple, un relevé bancaire, une carte de crédit ou tout autre certificat justificatif, comme, par exemple, une carte d'entrée, un récépissé ou un visa, notamment une carte à puce, notamment avec une interface RFID et/ou NFC dans le cas du jeton d'identification.

17. Procédé selon l'une des revendications précédentes, dans lequel il s'agit d'une carte à puce, notamment d'une carte micro SD, en particulier, d'une carte micro SD avec une antenne NFC intégrée dans le cas de l'élément sécurisé.

18. Procédé selon l'une des revendications précédentes, dans lequel l'élément sécurisé est transférée avant la personnalisation d'un statut de première utilisation dans un statut d'utilisation afin de permettre l'authentification de l'utilisateur par rapport à l'élément sécurisé.

19. Procédé selon l'une des revendications 9 à 18, dans lequel le cryptage de bout en bout (132') est réalisé par l'exécution d'un programme d'application (176) par le processeur de l'élément sécurisé, dans lequel le programme d'application est chargé avant l'exécution de la personnalisation à l'aide d'un appareil de téléphonie mobile (168) à partir d'un serveur d'application (174) par l'intermédiaire du réseau, dans lequel l'appareil de téléphonie mobile présente une interface de communication (170) pour la communication par l'intermédiaire d'une interface de communication (166) de l'élément sécurisé.

20. Système informatique avec un système informatique de fournisseur d'identification (136), un appareil de lecture avec des interfaces de communications (104, 105) pour la communication selon un premier, respectivement un deuxième, standard de transmission de données, dans lequel l'appareil de lecture est relié à un réseau (116) avec un jeton d'identification (106), dans lequel le jeton d'identification présente une mémoire électronique (118) avec un secteur de mémoire protégé (124, 162), dans lequel une information de personnalisation est enregistrée, dans lequel un accès pour le secteur de mémoire protégé n'est possible que par l'intermédiaire d'un processeur (128) du jeton d'identification, et dans lequel le jeton d'identification présente une interface de communication (108) pour la communication avec l'appareil de lecture selon le premier standard de transmission de données, dans lequel l'élément sécurisé présente une mémoire électronique (118') avec un secteur de mémoire protégé (124', 162'), dans lequel un accès vers le secteur de mémoire protégé n'est possible que par un processeur (128') de l'élément sécurisé, et dans lequel l'élément sécurisé présente une interface de communication (164) pour la communication avec l'appareil de lecture selon le deuxième standard de transmission de données.
dans lequel le système informatique est conçu pour une personnalisation de l'élément sécurisé (158) au moyen d'un jeton d'identification (106) pour une utilisation de l'élément sécurisé personnalisé par un programme de terminal, dans lequel le système informatique est conçu pour l'exécution des étapes suivantes :
i) enregistrement de l'information de personnalisation dans l'élément sécurisé par
a) la lecture de l'information de personnalisation provenant du jeton d'identification par un système informatique de fournisseur d'identification (136) habilité pour cela par l'intermédiaire d'un réseau (116),
b) la génération d'un nonce pour l'information de personnalisation par le système informatique de fournisseur d'identification,
c) l'enregistrement du nonce dans une banque de données par le système informatique de fournisseur d'identification, dans lequel l'information de personnalisation, ou une valeur qui en est dérivée, est employée en tant que clé d'accès en réponse au nonce,
d) l'écriture de l'information de personnalisation lue à partir du jeton d'identification, et/ou de la valeur en étant dérivée, et du nonce dans l'élément sécurisé par le système informatique de fournisseur d'identité habilité à ceci par l'intermédiaire du réseau,
ii) vérification de l'information de personnalisation enregistrée dans l'élément sécurisé par :
a) une relecture de l'information de personnalisation provenant du jeton d'identification par le système informatique de fournisseur d'identité (136) habilité pour cela par l'intermédiaire du réseau (116),
b) un accès à la banque de données avec l'information de personnalisation lue dans le jeton d'identification, ou d'une valeur en étant dérivée, en tant que clé d'accès par le système informatique de fournisseur d'identification afin de lire le nonce à partir de la banque de données,
c) la lecture du nonce à partir de l'élément sécurisé par le système informatique de fournisseur d'identification habilité pour cela,
d) le contrôle par le système informatique de fournisseur d'identification si le nonce lu à partir de l'élément sécurisé correspond avec le nonce lu à partir de la banque de données, et si c'est le cas :
iii) libération de l'élément sécurisé personnalisé pour une utilisation par un programme de terminal par
a) la génération d'un signal de validation par le système informatique de fournisseur d'identification,
b) la transmission du signal de validation du système informatique de fournisseur d'identification vers l'élément sécurisé,
c) l'enregistrement d'une information dans un secteur de mémoire protégé de l'élément sécurisé pour une interrogation par le programme terminal, dans lequel l'information indique l'état validé de l'élément sécurisé pour une utilisation par le programme terminal.

21. Système informatique selon la revendication 20, avec un appareil de téléphonie mobile (168), notamment un Smartphone, avec un appareil de lecture (170) à contacts intégré pour l'élément sécurisé, dans lequel l'appareil de téléphonie mobile est conçu pour charger un programme d'application (178), dans lequel un cryptage de bout en bout (132') est réalisé pour l'exécution du programme d'application (176) par un processeur de l'élément sécurisé.
